# EUROPEAN PATENT SPECIFICATION

(11) **EP 4 117 333 B1**
(45) Date of publication and mention of the grant of the patent: **07.10.2026**
(21) Application number: 21783848.1
(22) Date of filing: 29.03.2021
(51) Int. Cl.: H04W 24/08, H04W 52/02, H04W 76/28, H04W 28/18

(54) **MEASUREMENT METHOD AND APPARATUS**
MESSVERFAHREN UND -VORRICHTUNG
PROCÉDÉ ET APPAREIL DE MESURE

(30) Priority: 08.04.2020 CN 202010268725; 21.05.2020 CN 202010436189
(43) Date of publication of application: 11.01.2023
(73) Proprietor: Huawei Technologies Co., Ltd., Longgang Shenzhen, Guangdong 518129 (CN)
(72) Inventor: KUANG, Yiru, Shenzhen, Guangdong 518129 (CN); XUE, Yifan, Shenzhen, Guangdong 518129 (CN); WANG, Zhou, Shenzhen, Guangdong 518129 (CN); XU, Haibo, Shenzhen, Guangdong 518129 (CN)
(74) Representative: Gill Jennings & Every LLP
(86) International application number: PCT/CN2021/083591
(87) International publication number: WO 2021/204002

(56) References cited:
- EP-A1- 3 641 382
- WO-A1-2018/228468
- WO-A1-2021/254590
- CN-A- 107 278 379
- CN-A- 108 848 523
- CN-A- 109 151 982
- CN-A- 110 351 763
- US-A1- 2017 150 384
- US-A1- 2017 230 780
- US-A1- 2018 084 486
- XIAOMI: "Discussion on RRM measurement relaxation in connected mode for NR power saving enhancement", vol. RAN WG4, no. Electronic Meeting; 20201102 - 20201113, 23 October 2020 (2020-10-23), XP051943785, Retrieved from the Internet <URL:https://ftp.3gpp.org/tsg_ran/WG4_Radio/TSGR4_97_e/Docs/R4-2014654.zip R4-2014654 Discussion on RRM measurement relaxation in connected mode for NR power saving enhancement.docx> [retrieved on 20201023]
- QUALCOMM INCORPORATED: "Radio link monitoring consideration", vol. RAN WG1, no. Sanya, China; 20180416 - 20180420, 15 April 2018 (2018-04-15), XP051427048, Retrieved from the Internet <URL:http://www.3gpp.org/ftp/Meetings%5F3GPP%5FSYNC/RAN1/Docs/> [retrieved on 20180415]
- SAMSUNG: "Discussion on RLM requirement for IAB-MT", vol. RAN WG4, no. Online; 20200224 - 20200306, 14 February 2020 (2020-02-14), XP051850845, Retrieved from the Internet <URL:https://ftp.3gpp.org/tsg_ran/WG4_Radio/TSGR4_94_e/Docs/R4-2000889.zip R4-2000889_RLM_IAB_v4.docx> [retrieved on 20200214]
- SAMSUNG: "Discussion on RLM requirement for IAB-MT", 3GPP DRAFT; R4-2000889, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Online; 20200224 - 20200306, 14 February 2020 (2020-02-14), Mobile Competence Centre ; 650, route des Lucioles ; F-06921 Sophia-Antipolis Cedex ; France, XP051850845

## Description

This application claims priority to Chinese Patent Application No. 202010268725.4, filed with China National Intellectual Property Administration on April 08, 2020 and entitled "RLM MEASUREMENT RELAXATION METHOD, UE, AND NETWORK DEVICE", and Chinese Patent Application No. 202010436189.4, filed with China National Intellectual Property Administration on May 21, 2020 and entitled "MEASUREMENT METHOD AND APPARATUS".

### TECHNICAL FIELD

This application relates to the communications field, and in particular, to a measurement method and apparatus.

### BACKGROUND

In a 5G system, a terminal device may establish a radio resource control (radio resource control, RRC) connection to a network device, to perform radio link monitoring (radio link monitoring, RLM). If quality of a link between the terminal device and the network device deteriorates, and normal data transmission cannot be implemented, the terminal device considers that a radio link failure (radio link failure, RLF) occurs. In this case, the terminal device needs to initiate an RRC connection re-establishment process, to re-establish the RRC connection to the network device.

During RLM measurement, the terminal device needs to perform measurement on a configured radio link monitoring-reference signal (RLM-reference signal, RLM-RS). Correspondingly, the terminal device has corresponding power consumption. A terminal device with a limited battery level, for example, a mobile phone with a battery level lower than 20%, has a very strong requirement for reducing power consumption. Reducing power consumption may be achieved by performing RLM measurement relaxation, to meet the requirement of reducing power consumption of such terminal device.

Currently, there is no mechanism for RLM measurement relaxation, but there is a mechanism for RRM measurement relaxation. An RRM measurement relaxation condition is mainly to configure a reference signal receiving power (reference signal receiving power, RSRP)/reference signal receiving quality (reference signal receiving quality, RSRQ) measurement threshold through broadcast. Because reference signal configurations used for RLM measurement and RRM measurement are different (for example, reference signal resources are different), and layer 1/layer 3 filtering manners for measurement results are also different, it is not completely suitable to reuse the RRM measurement relaxation condition as an RLM measurement relaxation condition.

WO 2021/254590 A1 describes a method, apparatus, and a computer-readable storage medium for relaxation of radio link monitoring measurements.

XIAOMI "Discussion on RRM measurement relaxation in connected mode for NR power saving enhancement", 3GPP DRAFT R4-2014654, provides analysis on RLM/BFD measurements relaxation in connected mode for NR UE power saving QUALCOMM INCORPORATED: "Radio link monitoring consideration", 3GPP DRAFT R1-1804781, describes proposals for SSB-based radio link monitoring, RLM.

US 2017/150384 A1 relates to reporting measurements and in particular to relaxed measurement reporting when the wireless device is using multiple radio links for the control plane.

US 2017/230780 A1 describes adaptive radio link monitoring for machine type communication(s) (MTC), enhanced MTC (eMTC), and/or narrowband Internet-of-Things (NB-IoT).

SAMSUNG: "Discussion on RLM requirement for IAB-MT", 3GPP DRAFT R4-2000889, describes analyzing radio link measurement requirements for IAB-MT.

WO 2018/228468 A1 describes a wireless link monitoring method which includes high level of a terminal receiving a beam detection result message from a bottom level of the terminal, wherein the beam detection result message is used to indicate the result of beam monitoring.

Therefore, how to determine to perform RLM measurement relaxation is a problem that needs to be resolved.

### SUMMARY

The invention is defined by the independent claims. Additional features of the invention are provided in the dependent claims.

Embodiments of this application provide a measurement method and a measurement apparatus. A condition for whether to perform RLM measurement relaxation by a terminal device is specified based on a mechanism of the RLM measurement, to ensure accuracy and flexibility of whether to perform RLM measurement relaxation.

According to a first aspect, a measurement method according to claim 1 is provided.

In the solution provided in embodiments of this application, the terminal device may determine, based on the obtained first information and/or second information, whether to perform the RLM measurement relaxation. Because the first information and/or the second information are/is information related to RLM measurement, a condition for whether to perform RLM measurement relaxation by the terminal device may be specified based on a mechanism of the RLM measurement. Compared with a solution in the conventional technology that an RRM measurement relaxation condition is reused as an RLM measurement relaxation condition, this solution can ensure accuracy and flexibility of whether to perform RLM measurement relaxation.

With reference to the first aspect, in some possible implementations, the first information indicates that quality values of downlink radio links (i.e. values of downlink radio links quality) corresponding to all RLM-RS resources configured between the terminal device and the network device that are measured by the terminal device are less than or equal to the first threshold, and the second information is used to indicate that a quality value of the downlink radio link corresponding to at least one RLM-RS resource configured between the terminal device and the network device that is measured by the terminal device is greater than or equal to the second threshold.

With reference to the first aspect, in some possible implementations, the first information includes out-of-sync indication information, and the second information includes in-sync indication information.

With reference to the first aspect, in some possible implementations, that the terminal device obtains a plurality of pieces of information includes: A PHY layer of the terminal device obtains the plurality of pieces of information based on the detected quality values of the downlink radio links corresponding to the configured RLM-RS resources.

With reference to the first aspect, in some possible implementations, that the terminal device determines, based on the first information and/or the second information, whether to perform RLM measurement relaxation includes: The terminal device determines, based on an amount of the first information and/or an amount of the second information, whether to perform RLM measurement relaxation. Alternatively, the terminal device determines, based on whether information obtained in a first preset duration is the first information, whether to perform RLM measurement relaxation. Alternatively, the terminal device determines, based on whether information obtained in the first preset duration is the second information, whether to perform the RLM measurement relaxation.

In the technical solution provided in this embodiment of this application, because the terminal device determines, based on the amount of the first information and/or the amount of the second information, or the information obtained in the first preset duration, whether to perform RLM measurement relaxation, a condition for whether to perform RLM measurement relaxation by the terminal device may be specified based on a mechanism of the RLM measurement. Compared with a solution in the conventional technology that an RRM measurement relaxation condition is reused as an RLM measurement relaxation condition, this solution can further ensure accuracy and flexibility of whether to perform RLM measurement relaxation.

With reference to the first aspect, in some possible implementations, that the terminal device determines, based on an amount of the first information and/or an amount of the second information, whether to perform RLM measurement relaxation: The terminal device determines, based on an amount of the first information and/or an amount of the second information obtained in a first time period, whether to perform the RLM measurement relaxation. Alternatively, the terminal device determines, based on an amount of the first information continuously obtained or an amount of the second information continuously obtained before a current moment, whether to perform the RLM measurement relaxation.

In the solution provided in embodiments of this application, because the terminal device determines, based on the amount of first information and/or the amount of second information obtained in the first time period, or based on an amount of first information continuously obtained or an amount of second information continuously obtained before the current moment, whether to perform the RLM measurement relaxation, a condition for whether to perform RLM measurement relaxation by the terminal device may be specified based on a mechanism of the RLM measurement. Compared with the solution in the conventional technology that an RRM measurement relaxation condition is reused as an RLM measurement relaxation condition, this solution can further ensure accuracy and flexibility of whether to perform RLM measurement relaxation.

With reference to the first aspect, in some possible implementations, that the terminal device determines, based on an amount of the first information and/or an amount of the second information obtained in a first time period, whether to perform the RLM measurement relaxation includes: If the amount of first information obtained in the first time period is less than or equal to a third threshold or if the amount of second information obtained in the first time period is greater than a fourth threshold, the terminal device determines to perform the RLM measurement relaxation. If the amount of first information obtained in the first time period is greater than the third threshold or if the amount of second information obtained in the first time period is less than or equal to the fourth threshold, the terminal device determines not to perform the RLM measurement relaxation.

In the solution provided in embodiments of this application, the terminal device may determine, based on the amount of first information and/or the amount of second information obtained in the first time period and the preset threshold, whether to perform RLM measurement relaxation. This can further ensure accuracy and flexibility of whether to perform RLM measurement relaxation.

With reference to the first aspect, in some possible implementations, that the terminal device determines, based on an amount of the first information continuously obtained or an amount of the second information continuously obtained before a current moment, whether to perform the RLM measurement relaxation includes: If the amount of the first information continuously obtained before the current moment is less than or equal to a fifth threshold, or if the amount of the second information continuously obtained before the current moment is greater than a sixth threshold, the terminal device determines to perform the RLM measurement relaxation. If the amount of the first information continuously obtained before the current moment is greater than the fifth threshold, or if the amount of the second information continuously obtained before the current moment is less than or equal to the sixth threshold, the terminal device determines not to perform the RLM measurement relaxation.

In the solution provided in embodiments of this application, the terminal device may determine, based on the amount of first information and/or the amount of second information obtained before the current moment and the preset threshold, whether to perform RLM measurement relaxation. This can further ensure accuracy and flexibility of whether to perform RLM measurement relaxation.

With reference to the first aspect, in some possible implementations, that the terminal device determines, based on whether information obtained in a first preset duration is the first information, whether to perform the RLM measurement relaxation includes: If all the information obtained in the first preset duration is the first information, the terminal device determines not to perform the RLM measurement relaxation. Alternatively, if not all the information obtained in the first preset duration is not the first information, the terminal device determines not to perform the RLM measurement relaxation.

In the solution provided in embodiments of this application, the terminal device may determine, based on the information obtained in the first preset duration, whether to perform RLM measurement relaxation. This can further ensure accuracy and flexibility of whether to perform RLM measurement relaxation.

With reference to the first aspect, in some possible implementations, that the terminal device determines, based on whether information obtained in the first preset duration is the second information, whether to perform the RLM measurement relaxation includes: If all the information obtained in the first preset duration is the second information, the terminal device determines to perform RLM measurement relaxation. Alternatively, if not all the information obtained in the first preset duration is not the second information, the terminal device determines not to perform RLM measurement relaxation.

With reference to the first aspect, in some possible implementations, that the terminal device determines, based on the first information and/or the second information, whether to perform RLM measurement relaxation includes: The terminal device determines, based on the first information and/or the second information at intervals of a second preset duration, whether to perform the RLM measurement relaxation.

In the solution provided in embodiments of this application, the terminal device may determine, based on the first information and/or the second information at intervals of the second preset duration, whether to perform RLM measurement relaxation, so that power consumption can be reduced.

With reference to the first aspect, in some possible implementations, the method further includes: The terminal device receives a first message sent by the network device, where the first message is used to indicate that the terminal device is allowed to perform the RLM measurement relaxation, and/or the first message is used to indicate a related parameter of the RLM measurement relaxation.

In the solution provided in embodiments of this application, the network device may send, to the terminal device, the first message used to indicate that the terminal device is allowed to perform the RLM measurement relaxation, and the terminal device may perform the RLM measurement relaxation based on the first message, to ensure system performance.

With reference to the first aspect, in some possible implementations, the related parameter of the RLM measurement relaxation includes a parameter corresponding to a condition for the RLM measurement relaxation and/or a parameter corresponding to a manner of the RLM measurement relaxation.

With reference to the first aspect, in some possible implementations, the manner of the RLM measurement relaxation includes increasing a periodicity of RLM measurement.

With reference to the first aspect, in some possible implementations, the method further includes: The terminal device sends a second message to the network device, where the second message is used to request to configure the RLM measurement relaxation.

With reference to the first aspect, in some possible implementations, the method further includes: The terminal device sends a third message to the network device, where the third message is used to indicate that the terminal device has an RLM measurement relaxation capability.

With reference to the first aspect, in some possible implementations, the method further includes: The terminal device skips performing the RLM measurement relaxation in response to starting of a T310 timer, where the T310 timer is started when the terminal device detects a physical layer problem of a primary cell or a primary secondary cell.

In the solution provided in this application, that the T310 timer is in an on state indicates that the terminal device detects the physical layer problem of the primary cell or the primary secondary cell. The terminal device skips performing RLM measurement relaxation in response to the starting of the T310 timer. This facilitates system stability.

With reference to the first aspect, in some possible implementations, that the terminal device determines, based on the first information and/or the second information, whether to perform RLM measurement relaxation includes: The terminal device determines, based on the first information and/or the second information in combination with a first condition, whether to perform the RLM measurement relaxation, where the first condition includes at least one of the following conditions:

A variation difference of reference signal receiving power RSRP measured by the terminal device in a second time period is less than or equal to a seventh threshold, a variation difference of reference signal receiving quality RSRQ measured by the terminal device in the second time period is less than or equal to an eighth threshold, a value of the RSRP measured by the terminal device in a third time period is greater than or equal to a ninth threshold, a value of the RSRQ measured by the terminal device in the third time period is greater than or equal to a tenth threshold, and a periodicity of performing RLM measurement by the terminal device is less than or equal to an eleventh threshold.

In the solution provided in embodiments of this application, the terminal device may determine, based on RRM measurement relaxation and the first information and/or the second information, whether to perform RLM measurement relaxation. This can further ensure accuracy and flexibility of whether to perform RLM measurement relaxation.

According to a second aspect, a measurement method is provided, and the method includes: sending a first message to a terminal device, where the first message is used to indicate to allow the terminal device to perform RLM measurement relaxation, and/or the first message is used to indicate a related parameter of the RLM measurement relaxation.

With reference to the second aspect, in some possible implementations, the related parameter of the RLM measurement relaxation includes a parameter corresponding to a condition for the RLM measurement relaxation and/or a parameter corresponding to a manner of the RLM measurement relaxation.

With reference to the second aspect, in some possible implementations, the manner of the RLM measurement relaxation includes increasing a periodicity of RLM measurement.

With reference to the second aspect, in some possible implementations, the method further includes: receiving a second message sent by the terminal device, where the second message is used to request to configure the RLM measurement relaxation.

With reference to the second aspect, in some possible implementations, the method further includes: receiving a third message sent by the terminal device, where the third message is used to indicate that the terminal device has an RLM measurement relaxation capability.

For beneficial effects of the second aspect, refer to beneficial effects of the first aspect. Details are not described herein.

According to a third aspect, a measurement apparatus is provided. For beneficial effects, refer to the descriptions of the first aspect. Details are not described herein again. The measurement apparatus has a function of implementing a behavior in the method embodiments in the first aspect. The function may be implemented by hardware, or may be implemented by hardware executing corresponding software. The hardware includes one or more units corresponding to the foregoing function. In a possible design, the measurement apparatus includes: a processing unit, configured to obtain a plurality of pieces of information. The plurality of pieces of information include first information and/or second information. The first information is used to indicate that at least one quality value of a radio link between a terminal device and a network device is less than or equal to a first threshold. The second information is used to indicate that the at least one quality value of the radio link between the terminal device and the network device is greater than or equal to a second threshold. The processing unit is further configured to determines, based on the first information and/or the second information, whether to perform RLM measurement relaxation. These units may perform the corresponding functions in the method example in the first aspect. For details, refer to the detailed descriptions in the method example. Details are not described herein again.

According to a fourth aspect, a measurement apparatus is provided. For beneficial effects, refer to the descriptions of the second aspect. Details are not described herein again. The measurement apparatus has a function of implementing an action in the method embodiments in the second aspect. The function may be implemented by hardware, or may be implemented by hardware executing corresponding software. The hardware or the software includes one or more units corresponding to the function. In a possible design, the measurement apparatus includes: a transceiver unit, configured to send a first message to a terminal device, where the first message is used to indicate to allow the terminal device to perform RLM measurement relaxation, and/or the first message is used to indicate a related parameter of the RLM measurement relaxation. These units may perform the corresponding functions in the method example in the second aspect. For details, refer to the detailed descriptions in the method example. Details are not described herein again.

According to a fifth aspect, a measurement apparatus is provided. The measurement apparatus may be the terminal device in the method embodiments or a chip disposed in the terminal device that includes a transceiver and a processor. Optionally, the measurement apparatus further includes a memory. The processor is configured to control the transceiver to send and receive a signal. The memory is configured to store a computer program. The processor is configured to invoke the computer program from the memory and run the computer program, to enable the measurement apparatus to perform the method according to any one of the possible implementations of the first aspect.

According to a sixth aspect, a measurement apparatus is provided. The measurement apparatus may be the network device in the method embodiments or a chip disposed in the network device that includes a transceiver and a processor. Optionally, the measurement apparatus further includes a memory. The processor is configured to control the transceiver to send and receive a signal. The memory is configured to store a computer program. The processor is configured to invoke the computer program from the memory and run the computer program, to enable the measurement apparatus to perform the method according to any one of the possible implementations of the second aspect.

According to a seventh aspect, a computer program product is provided. The computer program product includes computer program code. When the computer program code is run, the methods performed by the terminal device in the foregoing aspects are performed.

According to an eighth aspect, a computer program product is provided. The computer program product includes computer program code. When the computer program code is run, the methods performed by the network device in the foregoing aspects are performed.

According to a ninth aspect, this application provides a chip system. The chip system includes a processor, configured to implement functions of the terminal devices in the methods in the foregoing aspects. In a possible design, the chip system further includes a memory, configured to store program instructions and/or data. The chip system may include a chip, or may include a chip and another discrete component.

According to a tenth aspect, this application provides a chip system. The chip system includes a processor, configured to implement functions of the network devices in the methods in the foregoing aspects. In a possible design, the chip system further includes a memory, configured to store program instructions and/or data. The chip system may include a chip, or may include a chip and another discrete component.

According to an eleventh aspect, this application provides a computer-readable storage medium. The computer-readable storage medium stores a computer program. When the computer program is run, the methods performed by the terminal device in the foregoing aspects are implemented.

According to a twelfth aspect, this application provides a computer-readable storage medium. The computer-readable storage medium stores a computer program. When the computer program is run, the methods performed by the network device in the foregoing aspects are implemented.

### BRIEF DESCRIPTION OF DRAWINGS

FIG. 1 is a schematic diagram of a wireless communications system applicable to an embodiment of this application;
FIG. 2 is a schematic flowchart of an example of a measurement method according to an embodiment of this application;
FIG. 3(a) to FIG. 3(d) are a schematic interaction diagram of another example of a measurement method according to an embodiment of this application;
FIG. 4 is a schematic flowchart of another example of a measurement method according to an embodiment of this application;
FIG. 5 is a schematic block diagram of an example of a measurement apparatus according to an embodiment of this application;
FIG. 6 is a schematic block diagram of another example of a measurement apparatus according to an embodiment of this application;
FIG. 7 is a schematic block diagram of still another example of a measurement apparatus according to an embodiment of this application;
FIG. 8 is a schematic block diagram of yet another example of a measurement apparatus according to an embodiment of this application; and
FIG. 9 is a schematic block diagram of a chip according to an embodiment of this application.

### DESCRIPTION OF EMBODIMENTS

The following describes technical solutions of this application with reference to accompanying drawings.

The technical solutions in embodiments of this application may be applied to various communications systems, for example, a long term evolution (long term evolution, LTE) system, an LTE frequency division duplex (frequency division duplex, FDD) system, an LTE time division duplex (time division duplex, TDD) system, a fifth generation (5th generation, 5G) mobile communications system or a new radio (new radio, NR) communications system, and a future mobile communications system.

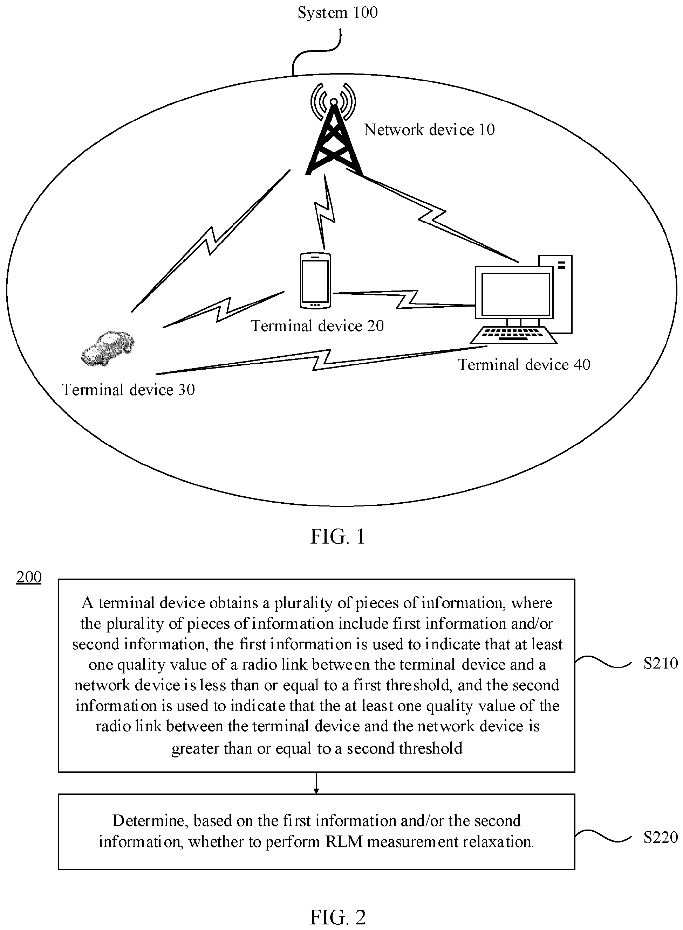

FIG. 1 is a schematic diagram of a wireless communications system 100 applicable to an embodiment of this application. As shown in FIG. 1, the wireless communications system 100 may include one or more network devices, for example, a network device 10 shown in FIG. 1. The wireless communications system 100 may further include one or more terminal devices, for example, a terminal device 20, a terminal device 30, and a terminal device 40 shown in FIG. 1.

FIG. 1 is only a schematic diagram. The communications system may further include another network device, for example, may further include a core network device, a wireless relay device, and a wireless backhaul device, which are not drawn in FIG. 1. Quantities of network devices and terminal devices included in the mobile communications system are not limited in embodiments of this application.

In the mobile communications system 100, the terminal device 20, the terminal device 30, and the terminal device 40 in embodiments of this application may also be referred to as a terminal, a terminal device, a mobile station (mobile station, MS), a mobile terminal (mobile terminal, MT), or the like. The terminal device in embodiments of this application may be a mobile phone (mobile phone), a tablet computer (Pad), or a computer with a wireless transceiver function, or may be a wireless terminal used in scenarios such as a virtual reality (virtual reality, VR), an augmented reality (augmented reality, AR), industrial control (industrial control), self driving (self driving), remote medical (remote medical) care, a smart grid (smart grid), transportation safety (transportation safety), a smart city (smart city), and a smart home (smart home). In this application, the terminal device and a chip that can be used in the terminal device are collectively referred to as a terminal device. It should be understood that a specific technology used by and a specific device form of the terminal device are not limited in embodiments of this application.

The network device 10 in this embodiment of this application may be a device configured to communicate with the terminal device. The network device may be a base station, an evolved NodeB (evolved node B, eNB), a home base station, an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, or may be a gNB in an NR system. Alternatively, the network device may be a component or a part of a device that constitutes the base station, for example, a central unit (central unit, CU), a distributed unit (distributed unit, DU), or a baseband unit (baseband unit, BBU). It should be understood that a specific technology used by and a specific device form of the network device are not limited in embodiments of this application. In this application, the network device may be a network device itself, or may be a chip used in the network device to complete a wireless communication processing function.

It should be understood that, in this embodiment of this application, the terminal device or the network device includes a hardware layer and an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a function module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable storage medium may include but is not limited to a magnetic storage device (for example, a hard disk, a floppy disk, or a magnetic tape), an optical disc (for example, a compact disc (compact disc, CD) or a digital versatile disc (digital versatile disc, DVD)), or a smart card and a flash memory device (for example, an erasable programmable read-only memory (erasable programmable read-only memory, EPROM), a card, a stick, or a key drive).

In addition, various storage media described in this specification may represent one or more devices and/or other machine-readable storage media that are configured to store information. The term "machine-readable storage media" may include but is not limited to a radio channel, and various other media that can store, include, and/or carry instructions and/or data.

It should be understood that division of manners, cases, types, and embodiments in embodiments of this application are only for ease of description, but should not constitute any special limitation, and features in various manners, types, cases, and embodiments may be combined when there is no contradiction.

It should be further understood that the terms "first", "second", and "third" in embodiments of this application are merely used for distinguishing, and should not be construed as any limitation on this application. For example, "first information" and "second information" in embodiments of this application indicate information transmitted between the network device and the terminal device.

It should be further understood that sequence numbers of the processes do not mean execution sequences in various embodiments of this application. The execution sequences of the processes should be determined according to functions and internal logic of the processes, and should not be construed as any limitation on the implementation processes of embodiments of this application.

It should be further noted that in embodiments of this application, "presetting", "predefining", or the like may be implemented by prestoring corresponding code or a table in a device (for example, including a terminal device and a network device), or in another manner that may be used to indicate related information. A specific implementation of "presetting", "predefining", or the like is not limited in this application, for example, a preset rule or a preset constant in embodiments of this application.

It should be noted that the term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. The following describes in detail technical solutions provided in this application with reference to the accompanying drawings.

In the following embodiments, without loss of generality, the measurement method in this application is specifically described by using an example in which a base station serves as a network device, and a sidelink communication process between at least two terminal devices and an uplink communication process between a terminal device and a base station are used. The terminal device may be any terminal device that is in a wireless communications system and that has a wireless connection relationship with one or more network devices. It may be understood that any terminal device in the wireless communications system may implement wireless communication based on a same technical solution. This is not limited in this application.

As shown in FIG. 1, in the 5G system, the terminal device 20 is used as an example. The terminal device 20 may establish an RRC connection to the network device 10, so that data can be transmitted between the terminal device 20 and the network device 10. After the terminal device 20 establishes the RRC connection to the network device 10, the terminal device 20 may perform RLM to determine that quality of a link between the terminal device 20 and the network device 10 is good, to ensure successful data transmission. An RLM behavior occurs only in a primary cell (primary cell, PCell) and/or a primary secondary cell (primary secondary cell, PSCell) of the terminal device. If quality of a link between the terminal device 20 and the network device 10 deteriorates, and normal data transmission cannot be implemented, the terminal device 20 considers that an RLF occurs. In this case, the terminal device 20 needs to initiate an RRC connection re-establishment process, to re-establish the RRC connection to the network device 10.

As mentioned above, after the terminal device establishes the RRC connection to the network device, the terminal device may perform RLM measurement to maintain a link state, to ensure successful data transmission. During RLM measurement, the terminal device needs to perform measurement on a configured RLM-RS. Correspondingly, the terminal device has corresponding power consumption. A terminal device with a limited battery level, for example, a mobile phone with a battery level lower than 20%, has a very strong requirement for reducing power consumption. Reducing power consumption may be achieved by performing RLM measurement relaxation, to meet the requirement of reducing power consumption of such terminal device.

During RLM measurement, a physical (physical, PHY) layer inside the terminal device may detect signal quality, and a medium access control (medium access control, MAC) layer inside the terminal device may determine a radio link state. Specific behaviors are as follows:
1. The PHY layer is used to detect an RLM-reference signal (reference signal, RS) to determine quality of a downlink radio link. If quality results of the downlink radio links that are measured on all RLM-RSs are lower than a threshold Qout, layer 1 (layer 1) indication information sent by the PHY layer to the MAC layer is out-of-sync indication (out-of-sync indication) information. If a quality result of the downlink radio link that is measured on at least one RLM-RS is greater than a threshold Qin, layer 1 indication information sent by the PHY layer to the MAC layer is in-sync indication (in-sync indication) information. The two layer 1 indications need to be separated by at least one time length T, and T may represent a measurement frequency of the RLM.
2. The MAC layer determines a radio link state. When the MAC layer receives N310 out-of-sync indications consecutively indicated by the PHY layer, and none of timers T300, T301, T304, T311, and T319 of the terminal device is running, a timer T310 is started. In this case, it may be considered that the terminal device detects a physical layer problem. In a running process of the timer T310, when the MAC layer receives the N311 in-sync indications consecutively indicated by the PHY layer, the timer T310 is stopped. In this case, it is considered that the terminal device recovers from the physical layer problem. When the timer T310 expires, it may be considered that an RLF occurs.

Currently, there is no mechanism for RLM measurement relaxation, but there is a mechanism for RRM measurement relaxation. For ease of understanding, the following first describes an RRM measurement relaxation condition.

A cell-center terminal device and/or a low-speed moving terminal device may perform measurement relaxation on RRM of a neighboring cell.

A relaxation condition may be configured by a network device, and specifically includes:
1. Moving state (moving at a low speed) of the terminal device: A variation difference between RSRP/RSRQ measured by the terminal device in a period of time is less than a first threshold.
2. Location of the terminal device (the terminal device is in a cell center): A value of RSRP/RSRQ measured by the terminal device is greater than a second threshold (in a period of time).

The first threshold and/or the second threshold may be the same as or different from the threshold Qout and the threshold Qin in the RLM measurement. This is not limited.

The network device may configure that RRM measurement relaxation may be performed when the condition 1 (moving at the low speed) is met and/or the condition 2 (the terminal device is in the cell center) is met.

A specific relaxation manner may include one or more of the following: increasing a measurement periodicity, reducing a quantity of measured cells, and reducing a quantity of measured frequencies.

As described above, for an RLM measurement relaxation condition, a similar principle may be followed, and the moving speed of the terminal device and/or the location of the terminal device in the cell are/is used as a determining condition. However, the RRM measurement relaxation condition is mainly to configure an RSRP/RSRQ measurement threshold through broadcast. Because reference signal configurations used for RLM measurement and RRM measurement are different (for example, reference signals are different, or resources occupied by the reference signals are different), and layer 1/layer 3 filtering manners of measurement results are also different (for example, manners of performing filtering processing on signals are different), it is not completely suitable to reuse the RRM measurement relaxation condition as the RLM measurement relaxation condition.

Therefore, this application provides a measurement method. A condition for whether to perform RLM measurement relaxation by a terminal device is specified based on a mechanism of the RLM measurement, to ensure accuracy and flexibility of whether to perform RLM measurement relaxation.

FIG. 2 shows a measurement method 200 according to an embodiment of this application. The method 200 may be performed by a terminal device, or may be performed by a chip in the terminal device. The measurement method 200 may include the following steps.

S210: The terminal device obtains a plurality of pieces of information, where the plurality of pieces of information include first information and/or second information, the first information is used to indicate that at least one quality value of a radio link between the terminal device and a network device is less than or equal to a first threshold, and the second information is used to indicate that the at least one quality value of the radio link between the terminal device and the network device is greater than or equal to a second threshold.

S220: Determine, based on the first information and/or the second information, whether to perform RLM measurement relaxation.

Steps S210 and S220 may be performed by at least one of the terminal device 20, the terminal device 30, or the terminal device 40 in FIG. 1.

In some embodiments, the first information and/or the second information in this application may alternatively be referred to as a first signal and/or a second signal. This is not limited.

It should be understood that the first threshold and/or the second threshold in embodiments of this application may be preconfigured, or may be continuously adjusted.

It should be further understood that a magnitude relationship between the first threshold and the second threshold in embodiments of this application is not limited. The first threshold may be greater than the second threshold, or the first threshold may be less than the second threshold, or the first threshold may be equal to the second threshold.

It should be noted that there may be a plurality of quality values of the radio links between the terminal device and the network device. If at least one of the quality values of the radio links is less than or equal to the first threshold, the terminal device obtains the first information. If at least one of the quality values of the radio links is greater than or equal to the second threshold, the terminal device obtains the second information.

In the solution provided in embodiments of this application, the terminal device may determine, based on the obtained first information and/or second information, whether to perform the RLM measurement relaxation. Because the first information and/or the second information are/is information related to RLM measurement, a condition for whether to perform RLM measurement relaxation by the terminal device may be specified based on a mechanism of the RLM measurement. Compared with a solution in the conventional technology that an RRM measurement relaxation condition is reused as an RLM measurement relaxation condition, this solution can ensure accuracy and flexibility of whether to perform RLM measurement relaxation.

Optionally, in some embodiments, that the terminal device obtains a plurality of pieces of information in step S210 may include: A PHY layer of the terminal device obtains the plurality of pieces of information based on detected quality values of downlink radio links corresponding to configured RLM-RS resources.

In this embodiment of this application, that the terminal device obtains a plurality of pieces of information may mean that a MAC layer of the terminal device receives the plurality of pieces of information sent by the PHY layer. The PHY layer may detect a quality value of the downlink radio link corresponding to the configured RLM-RS resource, generate the first information and/or the second information based on a detection result, and send the generated first information and/or second information to the MAC layer. The MAC layer may determine a radio link state (that is, determine quality of the radio link) based on the information sent by the PHY layer, so that whether to perform the RLM measurement relaxation can be determined.

Optionally, in some embodiments, the first information indicates that quality values of the downlink radio links corresponding to all RLM-RS resources configured between the terminal device and the network device that are measured by the terminal device are less than or equal to the first threshold, and the second information is used to indicate that a quality value of the downlink radio link corresponding to at least one RLM-RS resource configured between the terminal device and the network device that is measured by the terminal device is greater than or equal to the second threshold. Alternatively, the first information is used to indicate that all quality values of the configured downlink radio links configured between the terminal device and the network device that are measured by the terminal device are less than or equal to the first threshold, and the second information is used to indicate that at least one quality value of the downlink radio link configured between the terminal device and the network device that is measured by the terminal device is greater than or equal to the second threshold.

Optionally, in some embodiments, the first information includes out-of-sync indication information, and the second information includes in-sync indication information.

In embodiments of this application, the PHY layer of the terminal device may measure the quality of the downlink radio links corresponding to all the RLM-RS resources configured between the terminal device and the network device. If the quality values of the downlink radio links corresponding to all the RLM-RS resources that are measured by the PHY layer are less than or equal to the first threshold, the PHY layer may send the first information, namely, the out-of-sync indication information, to the MAC layer. If the value of the downlink radio link corresponding to the at least one RLM-RS resource that is measured by the PHY layer is greater than or equal to the second threshold, the PHY layer may send the second information, namely, the in-sync indication information, to the MAC layer. Therefore, the MAC layer may determine, based on at least one type of information of the received first information and second information, whether to perform RLM measurement relaxation.

In another embodiment, if some quality values of the downlink radio links in the quality values of the downlink radio links corresponding to all the RLM-RS resources that are measured by the PHY layer are less than or equal to the first threshold, the PHY layer may send the first information to the MAC layer. For example, if a quantity of quality values of the downlink radio links that are less than or equal to the first threshold in the quality values of the downlink radio links corresponding to all the RLM-RS resources that are measured by the PHY layer is greater than a preset quantity, or if a proportion of a quantity of quality values of the downlink radio links that are less than or equal to the first threshold in the quality values of the downlink radio links corresponding to all the RLM-RS resources that are measured by the PHY layer is greater than a preset proportion, the PHY layer may send the first information to the MAC layer.

In this embodiment of this application, it is assumed that the first threshold is less than the second threshold. If the quality values of the downlink radio links corresponding to all the RLM-RS resources configured between the terminal device and the network device that are measured by the terminal device are less than or equal to the first threshold, the PHY layer may send the first information to the MAC layer. If the quality value of the downlink radio link corresponding to the at least one RLM-RS resource configured between the terminal device and the network device that is measured by the terminal device is greater than or equal to the second threshold, the PHY layer may send the second information to the MAC layer.

It is assumed that the first threshold is equal to the second threshold. If the quality values of the downlink radio links corresponding to all the RLM-RS resources configured between the terminal device and the network device that are measured by the terminal device are less than or equal to the first threshold, the PHY layer may send the first information to the MAC layer. If the quality value of the downlink radio link corresponding to the at least one RLM-RS resource configured between the terminal device and the network device that is measured by the terminal device is greater than or equal to the second threshold, the PHY layer may send the second information to the MAC layer.

It is assumed that the first threshold is greater than the second threshold. If the quality values of the downlink radio links corresponding to all the RLM-RS resources configured between the terminal device and the network device that are measured by the terminal device are less than or equal to the first threshold and are less than or equal to the second threshold, the PHY layer may send the first information to the MAC layer. If the quality value of the downlink radio link corresponding to the at least one RLM-RS resource configured between the terminal device and the network device that is measured by the terminal device is greater than or equal to the second threshold and is greater than or equal to the first threshold, the PHY layer may send the second information to the MAC layer. If the quality values of the downlink radio links corresponding to all the RLM-RS resources configured between the terminal device and the network device that are measured by the terminal device are less than or equal to the first threshold and are greater than or equal to the second threshold, the PHY layer may send the first information and the second information to the MAC layer.

It is noted above that the terminal device may determine, based on the first information and/or the second information, whether to perform RLM measurement relaxation. The following describes in detail a plurality of manners in which the terminal device determines, based on at least one of the first information and the second information, whether to perform RLM measurement relaxation.

### Manner 1 of determining whether to perform RLM measurement relaxation

The terminal device determines, based on an amount of first information and/or an amount of second information, whether to perform the RLM measurement relaxation.

### Case 1 in Manner 1:

The terminal device may determine, based on the amount of first information, the amount of second information, or the amount of first information and the amount of second information that are obtained in a first time period, whether to perform the RLM measurement relaxation.

In this embodiment of this application, duration of the first time period may be 10 ms, 15 ms, or the like. This is not specifically limited. A value of the duration of the first time period may be configured by the network device, or may be predetermined in a protocol.

In the solution provided in embodiments of this application, because the terminal device determines, based on the amount of first information and/or the amount of second information obtained in the first time period, or based on an amount of first information continuously obtained or an amount of second information continuously obtained before a current moment, whether to perform the RLM measurement relaxation, a condition for whether to perform RLM measurement relaxation by the terminal device may be specified based on a mechanism of the RLM measurement. Compared with a solution in the conventional technology that an RRM measurement relaxation condition is reused as an RLM measurement relaxation condition, this solution can further ensure accuracy and flexibility of whether to perform RLM measurement relaxation.

In the case 1 in the manner 1, that the terminal device determines, based on the amount of first information and/or the amount of second information obtained in the first time period, whether to perform the RLM measurement relaxation includes the following possible implementations.
1. If the amount of first information obtained in the first time period is less than or equal to a third threshold, the terminal device determines to perform the RLM measurement relaxation. If the amount of first information obtained in the first time period is greater than the third threshold, the terminal device determines not to perform the RLM measurement relaxation.
2. If the amount of second information obtained in the first time period is greater than a fourth threshold, the terminal device determines to perform the RLM measurement relaxation. If the amount of second information obtained in the first time period is less than or equal to the fourth threshold, the terminal device determines not to perform the RLM measurement relaxation.
3. If the amount of first information obtained in the first time period is less than or equal to a third threshold and the amount of second information obtained in the first time period is greater than a fourth threshold, the terminal device determines to perform the RLM measurement relaxation. If the amount of first information obtained in the first time period is greater than the third threshold and/or the amount of second information obtained in the first time period is less than or equal to the fourth threshold, the terminal device determines not to perform the RLM measurement relaxation.

The third threshold and the fourth threshold in this embodiment of this application may be the same, or may be different. This is not specifically limited in this application.

For example, the following uses an example in which the third threshold is the same as the fourth threshold for description. It is assumed that both the third threshold and the fourth threshold in this application are 10, and the duration of the first time period is 10 ms.

① For example, whether to perform RLM measurement relaxation is determined by using the first information. If the PHY layer obtains five pieces of first information in the 10 ms and sends the five pieces of first information to the MAC layer, that is, the MAC layer receives the five pieces of first information in the 10 ms, the terminal device may determine to perform RLM measurement relaxation because the amount of first information received in the 10 ms is less than the third threshold. If the PHY layer obtains 12 pieces of first information in the 10 ms and sends the 12 pieces of first information to the MAC layer, that is, the MAC layer receives the 12 pieces of first information in the 10 ms, the terminal device may determine not to perform RLM measurement relaxation because the amount of first information obtained in the 10 ms is greater than the third threshold. In this case, the obtained information may include both the first information and the second information, or may include only the first information.

② For example, whether to perform RLM measurement relaxation is determined by using the second information. If the PHY layer obtains 11 pieces of second information in the 10 ms and sends the 11 pieces of second information to the MAC layer, that is, the MAC layer receives the 11 pieces of second information in the 10 ms, the terminal device may determine to perform RLM measurement relaxation because the amount of second information received in the 10 ms is greater than the fourth threshold. If the PHY layer obtains five pieces of second information in the 10 ms and sends the five pieces of second information to the MAC layer, that is, the MAC layer receives the five pieces of second information in the 10 ms, the terminal device may determine not to perform RLM measurement relaxation because the amount of second information received in the 10 ms is less than the fourth threshold. In this case, the obtained information may include both the first information and the second information, or may include only the second information.

③ For example, whether to perform RLM measurement relaxation is determined by using the first information and the second information. If the PHY layer obtains two pieces of first information and 11 pieces of second information in the 10 ms, and sends the two pieces of first information and the 11 pieces of second information to the MAC layer, that is, the MAC layer receives the two pieces of first information and the 11 pieces of second information in the 10 ms, the terminal device may determine to perform RLM measurement relaxation because the amount of first information received by the MAC layer in the 10 ms is less than the third threshold and the amount of second information received by the MAC layer in the 10 ms is greater than the fourth threshold. If the PHY layer obtains 12 pieces of first information and two pieces of second information in the 10 ms and sends the 12 pieces of first information and the two pieces of second information to the MAC layer, that is, the MAC layer receives the 12 pieces of first information and the two pieces of second information in the 10 ms, the terminal device may determine not to perform RLM measurement relaxation because the amount of first information received by the MAC layer in the 10 ms is greater than the third threshold and the amount of second information received by the MAC layer in the 10 ms is less than the fourth threshold.

It may be understood that, if the MAC layer receives five pieces of first information in the 10 ms, that is, the amount of first information received by the MAC layer in the 10 ms is less than the third threshold, it indicates that radio link quality is relatively stable in this case, and the terminal device may determine to perform RLM measurement relaxation. If the MAC layer receives 12 pieces of first information in the 10 ms, that is, the amount of first information received by the MAC layer in the 10 ms is greater than the third threshold, it indicates that the radio link quality is not stable in this case, and the terminal device may determine not to perform RLM measurement relaxation.

Similarly, if the MAC layer receives 11 pieces of second information in the 10 ms, that is, the amount of second information received by the MAC layer in the 10 ms is greater than the fourth threshold, it indicates that the radio link quality is relatively stable in this case, and the terminal device may determine to perform RLM measurement relaxation. If the MAC layer receives five pieces of second information in the 10 ms, that is, the amount of second information received by the MAC layer in the 10 ms is less than the fourth threshold, it indicates that the radio link quality is not stable in this case, and the terminal device may determine not to perform RLM measurement relaxation.

It should be noted that "less than or equal to" and "greater than" in embodiments of this application are not absolute. In some cases, if the amount of second information received by the MAC layer in the first time period is greater than or equal to the third threshold, the terminal device may also determine to perform RLM measurement relaxation.

For example, it is assumed that the third threshold in this application is 10, and the duration of the first time period is 10 ms. If the amount of second information received by the MAC layer in the 10 ms is 10, the terminal device may determine to perform RLM measurement relaxation.

It should be understood that the foregoing values are only an example for description, may alternatively be other values, and should not be construed as a particular limitation on this application.

In the solution provided in embodiments of this application, the terminal device may determine, based on the amount of first information and/or the amount of second information obtained in the first time period and the preset threshold, whether to perform RLM measurement relaxation. This can further ensure accuracy and flexibility of whether to perform RLM measurement relaxation.

### Case 2 in Manner 1:

That the MAC layer of the terminal device determines, based on the amount of first information or the amount of second information continuously received before the current moment, whether to perform RLM measurement relaxation includes the following possible implementations.
1. If the amount of first information continuously received before the current moment is less than or equal to a fifth threshold, the MAC layer determines to perform the RLM measurement relaxation. If the amount of first information continuously received before the current moment is greater than the fifth threshold, the MAC layer determines not to perform the RLM measurement relaxation.
2. If the amount of second information continuously received before the current moment is greater than a sixth threshold, the MAC layer determines to perform the RLM measurement relaxation. If the amount of second information continuously received before the current moment is less than or equal to the sixth threshold, the MAC layer determines not to perform the RLM measurement relaxation.
3. If the amount of first information continuously received before the current moment is less than or equal to the fifth threshold, and the amount of second information continuously received before the current moment is greater than the sixth threshold, the MAC layer determines to perform the RLM measurement relaxation. If the amount of first information continuously received before the current moment is greater than the fifth threshold, and/or the amount of second information continuously received before the current moment is less than or equal to the sixth threshold, the MAC layer determines not to perform the RLM measurement relaxation.

In this embodiment of this application, the amount of first information continuously obtained before the current moment may be an amount of first information continuously obtained before the current moment, and it may be understood as that the second information is not obtained in a time of continuously obtaining the first information. The amount of second information continuously obtained before the current moment may be an amount of second information continuously obtained before the current moment, and it may be understood as that the second information is not obtained in a time of continuously obtaining the second information.

The fifth threshold and the sixth threshold in this embodiment of this application may be the same, or may be different. This is not specifically limited in this application.

For example, the following uses an example in which the fifth threshold is the same as the sixth threshold for description. It is assumed that both the fifth threshold and the sixth threshold in this application are 10, and the current moment is 1:00 (or a radio frame number is 100).

① For example, whether to perform RLM measurement relaxation is determined by using the first information. If the PHY layer continuously obtains five pieces of first information before the 1:00 and sends the five pieces of first information to the MAC layer, that is, the MAC layer continuously receives the five pieces of first information before the 1:00, the terminal device may determine to perform RLM measurement relaxation because the amount of first information continuously received by the MAC layer before the 1:00 is less than the fifth threshold. If the PHY layer continuously obtains 11 pieces of first information before the 1:00 and sends the 11 pieces of first information to the MAC layer, that is, the MAC layer continuously receives the 11 pieces of first information before the 1:00, the terminal device may determine not to perform RLM measurement relaxation because the amount of first information continuously received by the MAC layer before the 1:00 is greater than the fifth threshold. In this case, the obtained information may include both the first information and the second information, or may include only the first information.
It may be further determined whether a ratio of the amount of first information to a total amount of information is less than a preset ratio. If the ratio is less than the preset ratio, RLM measurement relaxation is performed. If the ratio is not less than the preset ratio, RLM measurement relaxation is not performed.

② For example, whether to perform RLM measurement relaxation is determined by using the second information. If the PHY layer continuously obtains 12 pieces of second information before the 1:00 and sends the 12 pieces of second information to the MAC layer, that is, the MAC layer continuously receives the 12 pieces of second information before the 1:00, the terminal device may determine to perform RLM measurement relaxation because the amount of second information continuously received by the MAC layer before the 1:00 is greater than the sixth threshold. If the PHY layer continuously obtains six pieces of second information before the 1:00 and sends the six pieces of second information to the MAC layer, that is, the MAC layer continuously receives the six pieces of second information before the 1:00, the terminal device may determine not to perform RLM measurement relaxation because the amount of second information continuously received by the MAC layer before the 1:00 is less than the sixth threshold. In this case, the obtained information may include both the first information and the second information, or may include only the second information.
Whether a ratio of the amount of second information to a total amount of information is greater than a preset ratio may be further determined. If the ratio is greater than the preset ratio, RLM measurement relaxation is performed. If the ratio is not greater than the preset ratio, RLM measurement relaxation is not performed.

③For example, whether to perform RLM measurement relaxation is determined by using both the first information and the second information. If the PHY layer continuously obtains five pieces of first information and 12 pieces of second information before the 1:00, and sends the five pieces of first information and the 12 pieces of second information to the MAC layer, that is, the MAC layer continuously receives the five pieces of first information before the 1:00, and continuously receives the 12 pieces of second information before the 1:00, the terminal device may determine to perform RLM measurement relaxation because the amount of first information continuously received by the MAC layer before the 1:00 is less than the fifth threshold, and the amount of second information continuously received by the MAC layer before the 1:00 is greater than the sixth threshold. If the PHY layer continuously obtains 11 pieces of first information and two pieces of second information before the 1:00, and sends the 11 pieces of first information and the two pieces of second information to the MAC layer, that is, the MAC layer continuously receives the 11 pieces of first information before the 1:00, and continuously receives the two pieces of second information before the 1:00, the terminal device may determine not to perform RLM measurement relaxation because the amount of first information continuously received by the MAC layer before the 1:00 is greater than the fifth threshold, and the amount of second information continuously received by the MAC layer before the 1:00 is less than the sixth threshold. Similarly, whether to perform RLM measurement may be determined based on a ratio of the amount of first information to a total amount of information and a ratio the amount of second information to the total amount of information. A determining manner is similar to the determining manner by using the threshold, and details are not described herein again.

It may be understood that, if the MAC layer continuously receives five pieces of first information before the 1:00, that is, the amount of first information continuously received by the MAC layer before the 1:00 is less than the third threshold, it indicates that the radio link quality is relatively stable in this case, and the terminal device may determine to perform RLM measurement relaxation. If the MAC layer continuously receives 11 pieces of first information before the 1:00, that is, the amount of first information continuously received by the MAC layer before the 1:00 is greater than the third threshold, it indicates that the radio link quality is not stable in this case, and the terminal device may determine not to perform RLM measurement relaxation.

Similarly, if the MAC layer continuously receives 11 pieces of second information before the 1:00, that is, the amount of second information continuously received by the MAC layer before the 1:00 is greater than the fourth threshold, it indicates that the radio link quality is relatively stable in this case, and the terminal device may determine to perform RLM measurement relaxation. If the MAC layer continuously receives six pieces of second information before the 1:00, that is, the amount of second information continuously received by the MAC layer before the 1:00 is less than the fourth threshold, it indicates that the radio link quality is not stable in this case, and the terminal device may determine not to perform RLM measurement relaxation.

It should be noted that "less than or equal to" and "greater than" in embodiments of this application are not absolute. In some cases, if the amount of second information received by the MAC layer of the terminal device in the first time period is greater than or equal to the fifth threshold, the terminal device may also determine to perform RLM measurement relaxation.

For example, it is assumed that the fifth threshold in this application is 10, and duration of the first time period is 10 ms. If the amount of second information continuously received by the MAC layer within the 10ms is 10, the terminal device may determine to perform RLM measurement relaxation.

It should be understood that the foregoing values are only an example for description, may alternatively be other values, and should not be construed as a particular limitation on this application.

In the solution provided in embodiments of this application, the terminal device may determine, based on the amount of first information and/or the amount of second information obtained before the current moment and the preset threshold, whether to perform RLM measurement relaxation. This can further ensure accuracy and flexibility of whether to perform RLM measurement relaxation.

### Manner 2 of determining whether to perform RLM measurement relaxation

The terminal device determines, based on whether information obtained in a first preset duration is the first information, whether to perform the RLM measurement relaxation.

The first preset duration in this embodiment of this application may be preset, for example, may be preset to 10 ms or 15 ms; or may be continuously adjusted, for example, may be adjusted to 20 ms or another value. This is not specifically limited in this application. A value of the first preset duration may be configured by the network device, or may be predetermined in a protocol.

In the technical solution provided in this embodiment of this application, because the terminal device determines, based on the information obtained in the first preset duration, whether to perform RLM measurement relaxation, a condition for whether to perform RLM measurement relaxation by the terminal device may be specified based on a mechanism of the RLM measurement. Compared with the solution in the conventional technology that an RRM measurement relaxation condition is reused as an RLM measurement relaxation condition, this solution can further ensure accuracy and flexibility of whether to perform RLM measurement relaxation.

That the terminal device determines, based on whether information obtained in a first preset duration is the first information, whether to perform the RLM measurement relaxation includes the following cases.

During specific implementation, if all the information obtained in the first preset duration is the first information, the terminal device determines not to perform the RLM measurement relaxation. If one or more pieces of information are not the first information, the terminal device determines to perform the RLM measurement relaxation.

For example, it is assumed that the first preset duration is 10 ms. If all the information obtained by the PHY layer in the 10 ms is the first information, and the PHY layer sends the obtained first information to the MAC layer, that is, all the information received by the MAC layer in the 10 ms is the first information, the terminal device may determine not to perform the RLM measurement relaxation. If not all the information obtained by the PHY layer in the 10 ms is the first information, and the PHY layer sends the obtained information to the MAC layer, that is, not all the information received by the MAC layer in the 10 ms is the first information, the terminal device may determine to perform the RLM measurement relaxation.

It may be understood that, if all the information received by the MAC layer in the 10 ms is the first information, it indicates that radio link quality is not stable in this case, and the terminal device may determine not to perform RLM measurement relaxation. If not all the information received by the MAC layer in the 10 ms is the first information, it indicates that the radio link quality is relatively stable in this case, and the terminal device may determine to perform RLM measurement relaxation.

It should be noted that, in some embodiments, if a proportion of the first information in the information obtained in the first preset duration is greater than 80% (or another proportion), the terminal device may determine not to perform RLM measurement relaxation.

For example, it is assumed that the first preset duration is 10 ms. If nine pieces of information in the information obtained by the PHY layer in the 10 ms are the first information, and the PHY layer sends the obtained information to the MAC layer, that is, the MAC layer receives 10 pieces of information in the 10 ms, and there are nine pieces of first information in the 10 pieces of information, the proportion of the first information is greater than 80%. Although not all the information received by the MAC layer in the first preset duration is the first information, the first information accounts for a relatively high proportion, and it may also be considered that the radio link quality is not stable in this case, the terminal device may determine not to perform RLM measurement relaxation.

It should be understood that the foregoing values are only examples for description, and may be other values. For example, the proportion of the first information in the information obtained in the first preset duration may be set to 70% or 90%. This is not limited.

### Manner 3 of determining whether to perform RLM measurement relaxation

The terminal device determines, based on whether the information obtained in the first preset duration is the second information, whether to perform the RLM measurement relaxation.

The first preset duration in this embodiment of this application may be preset, for example, may be preset to 10 ms or 15 ms; or may be continuously adjusted, for example, may be adjusted to 20 ms or another value. This is not specifically limited in this application. A value of the first preset duration may be configured by the network device, or may be predetermined in a protocol.

In a possible implementation, if all the information obtained in the first preset duration is the second information, the terminal device determines to perform the RLM measurement relaxation. If one or more pieces of information are not the second information, the terminal device determines to perform the RLM measurement relaxation.

In the technical solution provided in this embodiment of this application, because the terminal device determines, based on the information obtained in the first preset duration, whether to perform RLM measurement relaxation, a condition for whether to perform RLM measurement relaxation by the terminal device may be specified based on a mechanism of the RLM measurement. Compared with the solution in the conventional technology that an RRM measurement relaxation condition is reused as an RLM measurement relaxation condition, this solution can further ensure accuracy and flexibility of whether to perform RLM measurement relaxation.

For example, it is assumed that the first preset duration is 10 ms. If all the information obtained by the PHY layer in the 10 ms is the second information, and the PHY layer sends the obtained second information to the MAC layer, that is, all the information received by the MAC layer in the 10 ms is the second information, the terminal device may determine to perform the RLM measurement relaxation. If not all the information obtained by the PHY layer in the 10 ms is the second information, and the PHY layer sends the obtained information to the MAC layer, that is, not all the information received by the MAC layer in the 10 ms is the second information, the terminal device may determine not to perform the RLM measurement relaxation.

It may be understood that, if all the information received by the MAC layer in the 10 ms is the second information, it indicates that radio link quality is stable in this case, and the terminal device may determine to perform RLM measurement relaxation. If not all the information received by the MAC layer in the 10 ms is the second information, it indicates that the radio link quality is relatively not stable in this case, and the terminal device may determine not to perform RLM measurement relaxation.

It should be noted that, in some embodiments, if a proportion of the second information in the information obtained in the first preset duration is greater than 80% (or another proportion), the terminal device may determine to perform RLM measurement relaxation. The proportion may be the same as or different from the proportion of determining, based on the first information, whether to perform RLM measurement relaxation.

For example, it is assumed that the first preset duration is 10 ms. If nine pieces of information in the information obtained by the PHY layer in the 10 ms are the second information, and the PHY layer sends the obtained information to the MAC layer, that is, the MAC layer receives 10 pieces of information in the 10 ms, and there are nine pieces of second information in the 10 pieces of information, the proportion of the second information is greater than 80%. Although not all the information received by the MAC layer in the first preset duration is the second information, the second information accounts for a relatively high proportion, and it may also be considered that the radio link quality is stable in this case, the terminal device may determine to perform RLM measurement relaxation.

It should be understood that the foregoing values are only examples for description, and may be other values. For example, the proportion of the second information in the information obtained in the first preset duration may be set to 70% or 90%. This is not limited.

In the solution provided in embodiments of this application, the terminal device may determine, based on the information obtained in the first preset duration, whether to perform RLM measurement relaxation. This can further ensure accuracy and flexibility of whether to perform RLM measurement relaxation.

Optionally, in some embodiments, the determining, based on the first information and/or the second information, whether to perform RLM measurement relaxation includes: determining, based on the first information and/or the second information at intervals of a second preset duration, whether to perform the RLM measurement relaxation.

In this embodiment of this application, the terminal device may determine, based on the first information and/or the second information at intervals of the second preset duration, whether to perform the RLM measurement relaxation. The second preset duration may be preset, or may be continuously adjusted. This is not specifically limited in this application. Whether to perform RLM measurement relaxation may be periodically determined based on the first information and/or the second information based on the second preset duration. Alternatively, a group of time parameters may be set, the group of time parameters includes a plurality of partially or all different time intervals (or other time information), and the terminal device aperiodically determines, based on the group of time parameters, whether to perform RLM measurement relaxation.

For example, the PHY layer of the terminal device may output a quality result of the downlink radio link that is measured by using the RLM-RS every 2 ms or 3 ms, and send layer 1 (layer 1) indication information to the MAC layer. The MAC layer determines, based on the received layer 1 (layer 1) indication information, whether to perform RLM measurement relaxation.

In the solution provided in embodiments of this application, the terminal device may determine, based on the first information and/or the second information at intervals of the second preset duration, whether to perform RLM measurement relaxation, so that power consumption can be reduced.

It should be noted that, in the embodiments, the amount of first information and/or the amount of second information may be determined by using a counter, and the duration of the time period or the preset duration may be determined by using a timer. For example, the terminal device may start the timer when starting to calculate the duration of the time period or the preset duration, and may start the counter when starting to calculate the amount. For example, each time one piece of first information or second information is received, counting is performed once, the timer is stopped until duration set in the timer is reached, and the amount of first information and/or the amount of second information counted by the counter is determined.

Based on this, the foregoing mainly describes a case in which the MAC layer of the terminal device may determine, based on the received information, whether to perform RLM measurement relaxation. The following describes, based on a message sent between the terminal device and the network device, an auxiliary condition for performing RLM measurement relaxation by the terminal device.

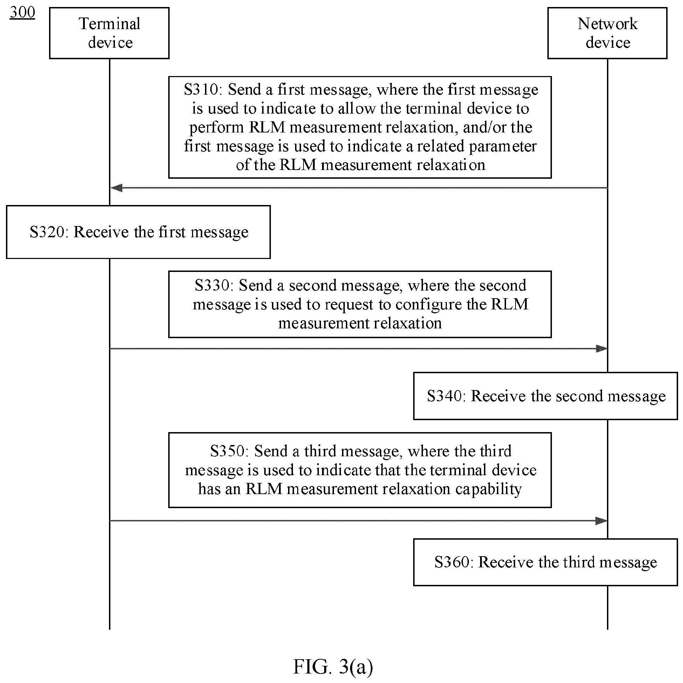

Optionally, in some embodiments, FIG. 3(a) is a schematic flowchart of a measurement method 300 according to an embodiment of this application. The method 300 may include the following steps.

S310: A network device sends a first message to a terminal device, where the first message is used to indicate to allow the terminal device to perform RLM measurement relaxation, and/or the first message is used to indicate a related parameter of the RLM measurement relaxation. Correspondingly, in S320, the terminal device receives the first message.

Optionally, in some embodiments, the related parameter of the RLM measurement relaxation includes a parameter corresponding to a condition for the RLM measurement relaxation and/or a parameter corresponding to a manner of the RLM measurement relaxation. The parameter corresponding to the condition for the RLM measurement relaxation and the manner of the RLM measurement relaxation may be carried in a same message and sent to the terminal device, or may be carried in different messages and sent to the terminal device.

In other words, the first message may include one message or a plurality of messages. If the first message includes one message, the parameter corresponding to the condition for the RLM measurement relaxation and the manner of the RLM measurement relaxation may be carried in the message and sent to the terminal device. If the first message includes a plurality of messages, the parameter corresponding to the condition for the RLM measurement relaxation and the manner of the RLM measurement relaxation may be carried in one of the messages and sent to the terminal device, or may be carried in different messages and sent to the terminal device. This is not limited. Alternatively, the first message means a plurality of messages. The plurality of messages may be messages sent at the same time, or may be messages not sent at the same time. The parameter corresponding to the condition for the RLM measurement relaxation and the manner of the RLM measurement relaxation are carried in different messages in the plurality of messages.

In this embodiment of this application, the network device may send the first message to the terminal device. The first message may explicitly indicate that the terminal device is allowed to perform the RLM measurement relaxation. For example, the network device may send an indication field or a field to the terminal device. The indication field or the field is used to indicate that the terminal device is allowed to perform the RLM measurement relaxation. Alternatively, the first message may implicitly indicate that the terminal device is allowed to perform the RLM measurement relaxation. For example, the first message may indicate a related parameter of RLM measurement relaxation to the terminal device, and implicitly indicate, by indicating the related parameter of RLM measurement relaxation, that the terminal device is allowed to perform the RLM measurement relaxation.

Optionally, in some embodiments, the manner of the RLM measurement relaxation includes increasing a periodicity of RLM measurement.

In this embodiment of this application, the terminal device may perform RLM measurement relaxation by increasing the periodicity (represented by T below) of RLM measurement. T is a time interval between two measurements, and T can reflect a measurement frequency to some extent. Specifically, determining T may include the following several cases:
(1) When discontinuous reception (discontinuous reception, DRX) is not configured: T=max (10 ms, T_{RLM-RS, M}).
(2) When a configured DRX periodicity value≤320 ms: T=max (10 ms, 1.5*DRX periodicity value, 1.5*T_{RLM-RS, M}).
(3) When a configured DRX periodicity value>320 ms: T=DRX periodicity value.
(4) A periodicity value is updated. The updated periodicity value is greater than a current periodicity value of performing RLM measurement.

The T_{RLM-RS, M} represents a minimum value in all periodicity values corresponding to a configured RLM-RS resource.

In this embodiment of this application, RLM measurement relaxation may be performed in the following manner:
a. A new value X (unit: ms) is configured to replace 10 ms, and X>10.

For example, when discontinuous reception DRX is not configured: T=max (15 ms, T_{RLM-RS, M}).

If the T_{RLM-RS, M}<15, T=15 ms, so that the periodicity of RLM measurement can be increased.

b. A new RLM-RS resource with a larger periodicity value is configured, so that a minimum value in all periodicity values corresponding to the RLM-RS resource increases.

For example, when discontinuous reception DRX is not configured: T=max (10 ms, T_{RLM-RS, M}), if a minimum value in all configured time intervals T_{RLM-RS, M} is greater than 10 ms, T=T_{RLM-RS, M}.

c. A new coefficient Y is configured to replace 1.5, and Y>1.5.

For example, when a configured DRX periodicity value≤320 ms: T=max (10 ms, 2*DRX periodicity value, 2*T_{RLM-RS, M}). If 2*DRX periodicity value>10 and/or 2*T_{RLM-RS, M}>10, T=2*DRX periodicity value or 2*T_{RLM-RS, M}, so that the periodicity of RLM measurement can be increased.

d. A new coefficient value is configured, the formula is multiplied by the coefficient value, and the coefficient value is greater than 1.

For example, when discontinuous reception DRX is not configured: T=2*max (10 ms, T_{RLM-RS, M}), and when the configured DRX periodicity value≤320 ms: T=2*max (10 ms, 1.5*DRX periodicity value, 1.5*T_{RLM-RS, M}). Alternatively, when the configured DRX periodicity value>320 ms: T=2*DRX periodicity value.

e. When a short DRX periodicity is used, a value of the "DRX" periodicity value in the formula is a value of a long DRX periodicity, or is Z*DRX periodicity value, and Z>1.

It should be noted that a basic DRX mechanism is mainly introduced to reduce power consumption. The network device configures a DRX periodicity for the terminal device in an RRC connected state. The DRX periodicity may be a long DRX periodicity, or may be a short DRX periodicity. The long DRX periodicity needs to be configured by default, and the short DRX periodicity is optional.

If the network device configures a short DRX periodicity value and a long DRX periodicity value for terminal device in an RRC connected mode, and if a short DRX periodicity is currently used, the DRX periodicity value in the formula may be a value of the long DRX periodicity. For example, it is assumed that a configured short DRX periodicity value is 5 ms, and a configured long DRX periodicity value is 10 ms. If the short DRX periodicity value 5 ms is currently used, the long DRX periodicity value may be used for calculation when a periodicity of the RLM measurement relaxation is calculated in this application.

Alternatively, a coefficient value Z may be multiplied, and the coefficient value>1, that is, T=Z*DRX periodicity value. It should be noted that the DRX periodicity value is a currently used DRX periodicity value. That is, if the short DRX periodicity value is currently used, the DRX periodicity value in the formula is the short DRX periodicity value 5 ms. If the long DRX periodicity value is currently used, the DRX cycle value in the formula is the long DRX periodicity value 10 ms.

f. The terminal device may alternatively update the periodicity value, and the updated periodicity value is greater than a periodicity value of performing RLM measurement by the terminal device currently.

For example, if the current periodicity value of performing the RLM measurement is 5 ms, the terminal device may directly use the periodicity value of 10 ms to perform the RLM measurement.

The related parameter of the RLM measurement relaxation may include a parameter corresponding to a condition for RLM measurement relaxation and/or a parameter corresponding to a manner of the RLM measurement relaxation. The parameter corresponding to the condition for the RLM measurement relaxation may include at least one of the third threshold, the fourth threshold, the fifth threshold, the sixth threshold, and the first preset duration or the first time period that are mentioned above. The parameter of the manner of the RLM measurement relaxation may indicate an increase of the periodicity of the RLM measurement, and may indicate a specific periodicity value. The specific periodicity value is an increased periodicity of the RLM measurement. The parameter corresponding to the manner of the RLM measurement relaxation may include at least one of X, the RLM-RS resource with the larger periodicity value, Y, the new coefficient value, the value that specifies the value of the long DRX periodicity as the "DRX" periodicity value, the value that specifies the Z*DRX periodicity value as the "DRX" periodicity value, and Z that are mentioned above.

In some embodiments, the network device may perform configuration based on a request sent by the terminal device, to balance RLM measurement relaxation and system performance, and then determine whether to send, to the terminal device, the first message used to indicate that the terminal device is allowed to perform the RLM measurement relaxation.

In the solution provided in embodiments of this application, the network device may send, to the terminal device, the first message used to indicate that the terminal device is allowed to perform the RLM measurement relaxation, and the terminal device may perform the RLM measurement relaxation based on the first message, to ensure system performance.

Optionally, in some embodiments, as shown in FIG. 3(a), the method 300 may further include the following steps.

S330: The terminal device sends a second message to the network device, where the second message is used to request to configure the RLM measurement relaxation. Correspondingly, in S340, the network device receives the second message.

In this embodiment of this application, the terminal device may send the second message to the network device, to request the network device to configure RLM measurement relaxation.

It should be noted that the terminal device may send the second message to the network device based on a power saving requirement of the terminal device (for example, whether a current electromechanical quantity is lower than 20%), to request the network device to configure the RLM measurement relaxation. The network device may determine, based on current network performance, whether to configure the RLM measurement relaxation for the terminal device, that is, determine whether to send the first message to the terminal device.

Optionally, in some embodiments, as shown in FIG. 3(a), the method 300 may further include the following steps.

S350: The terminal device sends a third message to the network device, where the third message is used to indicate that the terminal device has an RLM measurement relaxation capability. Correspondingly, in S360, the network device receives the third message.

In this embodiment of this application, the terminal device may send the third message to the network device, to notify the network device that the terminal device has the RLM measurement relaxation capability. When the terminal device requests the network device to configure RLM measurement relaxation, the network device may indicate the terminal device to perform RLM measurement relaxation.

It should be noted that, generally, the terminal device may send the third message to the network device once, to notify the network device that the terminal device has the RLM measurement relaxation capability, and may no longer send the third message to the network device subsequently. If the terminal device determines, based on the first information and/or the second information, that RLM measurement relaxation needs to be performed, the terminal device may directly perform RLM measurement relaxation.

It should be understood that the execution sequence in the example is only an example. The execution sequence in the example may be S330, S340, S310, S320, S350 and S360, or S330, S340, S350, S360, S310 and S320, or S350, S360, S310, S320, S330 and S340, or S350, S360, S330, S340, S310 and S320. The execution sequence in the example is not specifically limited in this application.

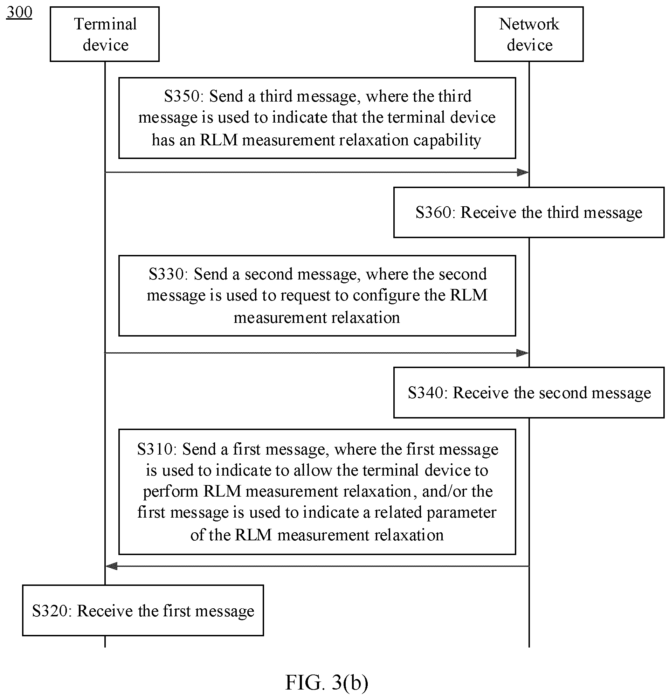

For example, FIG. 3(b) is a schematic flowchart of another measurement method 300 according to an embodiment of this application. The method 300 may be performed in the following sequence.

S350: A terminal device sends a third message to a network device, where the third message is used to indicate that the terminal device has an RLM measurement relaxation capability. Correspondingly, in S360, the network device receives the third message.

S330: The terminal device sends a second message to the network device, where the second message is used to request to configure RLM measurement relaxation. Correspondingly, in S340, the network device receives the second message.

S310: The network device sends a first message to the terminal device, where the first message is used to indicate to allow the terminal device to perform the RLM measurement relaxation, and/or the first message is used to indicate a related parameter of the RLM measurement relaxation. Correspondingly, in S320, the terminal device receives the first message.

For specific content, refer to the description in FIG. 3(a). For brevity, details are not described herein again.

In some embodiments, the terminal device may directly send the second message to the network device, and the network device may determine, based on the second message, whether to send the first message to the terminal device.

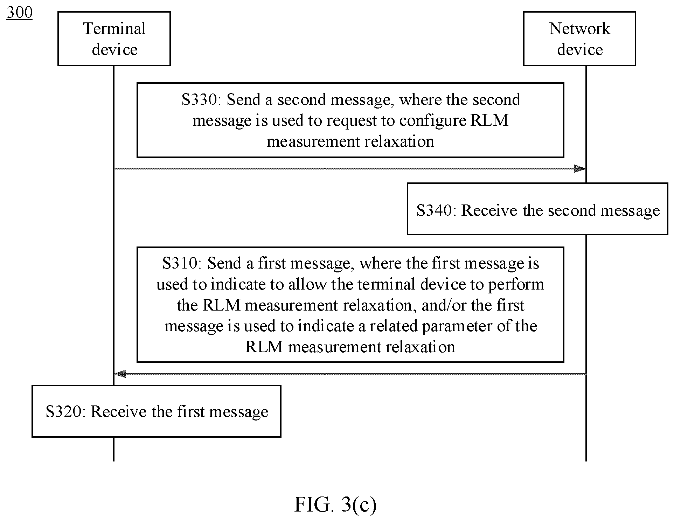

For example, FIG. 3(c) is a schematic flowchart of still another measurement method 300 according to an embodiment of this application. The method 300 may be performed in the following sequence.

S330: A terminal device sends a second message to a network device, where the second message is used to request to configure RLM measurement relaxation. Correspondingly, in S340, the network device receives the second message.

S310: The network device sends a first message to the terminal device, where the first message is used to indicate to allow the terminal device to perform the RLM measurement relaxation, and/or the first message is used to indicate a related parameter of the RLM measurement relaxation. Correspondingly, in S320, the terminal device receives the first message.

It may be understood that, if the terminal device sends the second message to the network device, it may indirectly indicate that the terminal device has an RLM measurement relaxation capability. Therefore, in this implementation, the terminal device may not need to send a third message to the network device.

In some other embodiments, the terminal device may alternatively send the third message to the network device, and the network device may directly send the first message to the terminal device.

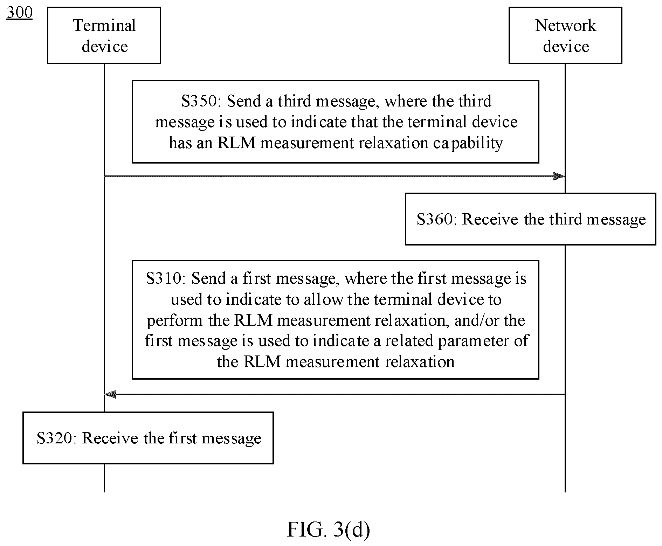

For example, FIG. 3(d) is a schematic flowchart of yet another measurement method 300 according to an embodiment of this application. The method 300 may be performed in the following sequence.

S350: A terminal device sends a third message to a network device, where the third message is used to indicate that the terminal device has an RLM measurement relaxation capability. Correspondingly, in S360, the network device receives the third message.

S310: The network device sends a first message to the terminal device, where the first message is used to indicate to allow the terminal device to perform RLM measurement relaxation, and/or the first message is used to indicate a related parameter of the RLM measurement relaxation. Correspondingly, in S320, the terminal device receives the first message.

For specific content, refer to the description in FIG. 3(a). For brevity, details are not described herein again.

It may be understood that the network device may directly send the first message to the terminal device. In other words, even if the network device does not receive a second message sent by the terminal device for requesting to configure RLM measurement relaxation, the network device may still send the first message, that is, a message indicating that the terminal device is allowed to perform RLM measurement relaxation, to the terminal device. The terminal device may implement RLM measurement relaxation based on the received first message.

In some cases, the terminal device may alternatively not perform RLM measurement relaxation. For details, refer to the following descriptions.

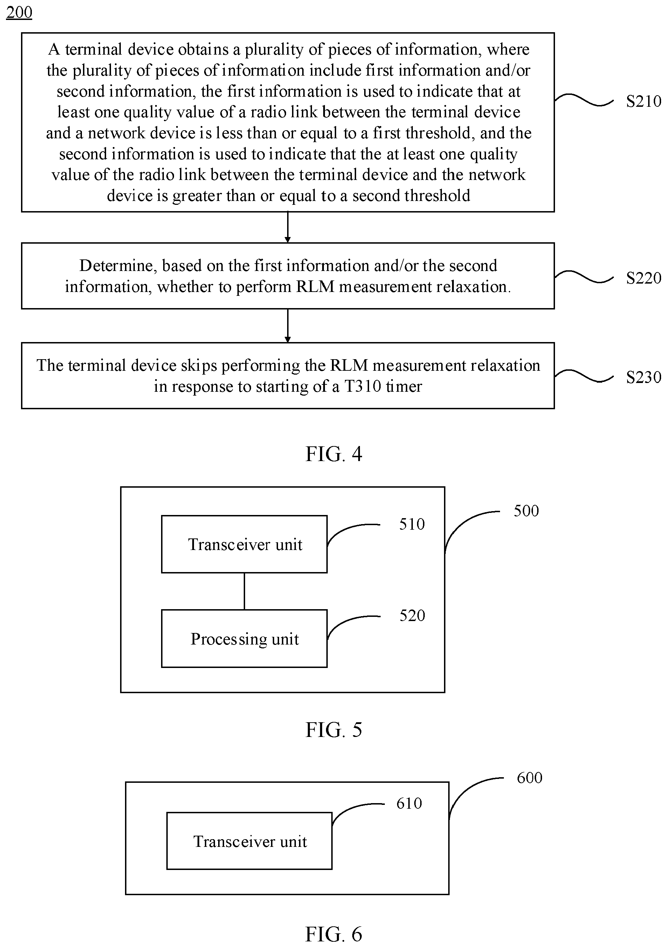

Optionally, in some embodiments, as shown in FIG. 4, a method 200 may further include the following step.

S230: The terminal device skips performing the RLM measurement relaxation in response to starting of a T310 timer, where the T310 timer is started when the terminal device detects a physical layer problem of a primary cell or a primary secondary cell.

For example, it is assumed that the MAC layer receives a plurality of pieces of first information sent by the PHY layer, and the timer T310 may be started. In this case, the terminal device may not perform the RLM measurement relaxation.

It may be understood that, if the MAC layer receives the plurality of pieces of first information sent by the PHY layer, it indicates that radio link quality is not stable in this case, and the MAC layer may not perform the RLM measurement relaxation. In other words, when the downlink radio link quality is not stable, no matter whether the terminal device has a strong power saving requirement, the terminal device may not perform the RLM measurement relaxation.

In the solution provided in this application, that the T310 timer is in an on state indicates that the terminal device detects the physical layer problem of the primary cell or the primary secondary cell. The terminal device skips performing RLM measurement relaxation in response to the starting of the T310 timer, to facilitate system stability.

Optionally, in some embodiments, that the terminal device determines not to perform the RLM measurement relaxation in response to starting of a T310 timer includes:

In response to starting of the timer T310, if the MAC layer continuously receives, in a first time period, M1 pieces of second information sent by the PHY layer, and M1<M or M1=M, the terminal device determines not to perform the RLM measurement relaxation.

M is set based on the following rule: When an amount of second information continuously received by the MAC layer is less than or equal to M, the terminal device skips performing RLM measurement relaxation.

In this embodiment of this application, it is assumed that duration of the first time period is 10 ms, and M=10. After the timer T310 is started, if the amount of second information continuously received by the MAC layer in the 10 ms M1 is less than 10, for example, M1=9, the terminal device may determine not to perform RLM measurement relaxation.

It should be noted that M and M1 are set relative to each other. To be specific, this application may be applied provided that M1<M or M1=M is met. For example, if M=5, M1 may be less than or equal to 5. This is not specifically limited in this application.

Optionally, in some embodiments, that the terminal device determines not to perform the RLM measurement relaxation in response to starting of a T310 timer includes:

In response to starting of the timer T310, if the MAC layer continuously receives, in the first time period, M2 pieces of first information sent by the PHY layer, and M2>M0 or M2=M0.

M0 is set based on the following rule: When an amount of first information continuously received by the MAC layer is greater than or equal to M0, the terminal device skips performing RLM measurement relaxation.

In this embodiment of this application, it is assumed that duration of the first time period is 10 ms, and M0=10. After the timer T310 is started, if the amount of first information continuously received by the MAC layer in the 10 ms M2 is greater than 10, for example, M2=12, the terminal device may determine not to perform RLM measurement relaxation.

It should be noted that M0 and M2 are set relative to each other. To be specific, this application may be applied provided that M2>M0 or M2=M0 is met. For example, if M0=5, M1 may be greater than or equal to 5. This is not specifically limited in this application.

Optionally, in some embodiments, the determining, based on the first information and/or the second information, whether to perform RLM measurement relaxation includes: Determine, based on the first information and/or the second information in combination with a first condition, whether to perform the RLM measurement relaxation. The first condition includes at least one of the following conditions: A variation difference of RSRP measured by the terminal device in a second time period is less than or equal to a seventh threshold, a variation difference of RSRQ measured by the terminal device in the second time period is less than or equal to an eighth threshold, a value of the RSRP measured by the terminal device in a third time period is greater than or equal to a ninth threshold, a value of the RSRQ measured by the terminal device in the third time period is greater than or equal to a tenth threshold, and a periodicity of performing RLM measurement by the terminal device is less than or equal to an eleventh threshold.

Optionally, the second time period and/or the third time period may be a time interval between two measurements. Alternatively, duration of the second time period and duration of the third time period may not be limited, that is, the first condition may be at least one of the following conditions: A variation difference of RSRP measured by the terminal device is less than or equal to the seventh threshold. A variation difference of RSRQ measured by the terminal device is less than or equal to the eighth threshold. A value of the RSRP measured by the terminal device is greater than or equal to the ninth threshold. A value of the RSRQ measured by the terminal device is greater than or equal to the tenth threshold.

To be specific, the terminal device may determine, based on the first information and/or the second information, whether a second condition for measurement relaxation is met, determine whether the first condition (the first condition is at least one of the first conditions) is met, and perform RLM measurement relaxation when both the second condition and the first condition are met. Whether the second condition is met may be determined first, or whether the first condition is met may be determined first, or whether the second condition and the first condition are met may be determined at the same time. This is not limited in this embodiment of this invention.

In this embodiment of this application, the terminal device may determine, based on that the terminal device meets the first condition, whether to perform RLM measurement relaxation.

For example, that the first condition is the variation difference of the RSRP measured by the terminal device in the second time period is used as an example. That the first condition is met may be, for example, that the variation difference of the RSRP measured by the terminal device in the second time period is less than or equal to the seventh threshold. It is assumed that the seventh threshold is 10, and the duration of the second time period is 10 ms. If the variation difference of the RSRP measured by the terminal device in the 10 ms is less than 10, for example, the variation difference is 5, the terminal device may determine that the first condition is met. If the variation difference of the RSRP measured by the terminal device in the 10 ms is greater than 10, for example, the variation difference is 15, the terminal device may determine that the first condition is not met.

That the first condition is the variation difference of the RSRP measured by the terminal device in the second time period is used as an example. According to whether the second condition for measurement relaxation is met that is determined based on the first information and/or the second information, the determining whether to perform RLM measurement relaxation may include the following three cases.

① The terminal device may first determine whether the first condition is met, that is, determine whether the variation difference of the RSRP measured by the terminal device in the second time period is less than or equal to the seventh threshold. If the variation difference of the RSRP measured by the terminal device in the second time period is less than or equal to the seventh threshold, the terminal device determines, based on the first information and/or the second information, whether the second condition for measurement relaxation is met, and finally determine whether to perform RLM measurement relaxation. If the variation difference of the RSRP measured by the terminal device in the second time period is greater than the seventh threshold, the terminal device may also determine, based on the first information and/or the second information, whether the second condition for measurement relaxation is met, and finally determine whether to perform RLM measurement relaxation.

② Alternatively, the terminal device may first determine whether the second condition for measurement relaxation is met, and then determine whether the first condition is met if the second condition for measurement relaxation is met, that is, determine whether the variation difference of the RSRP measured by the terminal device in the second time period is less than or equal to the seventh threshold. If the variation difference of the RSRP measured by the terminal device in the second time period is less than or equal to the seventh threshold, the terminal device determines to perform RLM measurement relaxation. If the variation difference of the RSRP measured by the terminal device in the second time period is greater than the seventh threshold, the terminal device may also determine to perform RLM measurement relaxation. If the terminal device does not meet the second condition of measurement relaxation, the terminal device may determine not to perform RLM measurement relaxation.

③ Alternatively, the terminal device may determine whether both the second condition for measurement relaxation and the first condition are met. If both the second condition for measurement relaxation and the first condition are met, the terminal device may determine to perform RLM measurement relaxation. If both the second condition for measurement relaxation and the first condition are not met, the terminal device may determine not to perform RLM measurement relaxation. If the second condition for measurement relaxation is met but the first condition is not met, the terminal device may determine to perform RLM measurement relaxation. If the first condition is met, but the second condition for measurement relaxation is not met, the terminal device may determine not to perform RLM measurement relaxation.

Similarly, other conditions in the first conditions are similar to those described above. For brevity, details are not described herein again.

Optionally, the first message may further include a parameter corresponding to the first condition. The parameter corresponding to the first condition may include at least one of the seventh threshold, the eighth threshold, the ninth threshold, the tenth threshold, the eleventh threshold, and the duration of the second time period or the duration of the third time period that are mentioned above.

It should be specially noted that, if the first condition is that a periodicity of performing RLM measurement by the terminal device is less than or equal to the eleventh threshold, and if it is assumed that the eleventh threshold is 5 ms and the periodicity of performing RLM measurement by the terminal device is 2 ms, it indicates that in this case, the terminal device performs RLM measurement at a relatively high frequency. In this case, the terminal device may determine, based on the first information and/or the second information, whether to perform RLM measurement relaxation.

Similarly, that the first condition is that the periodicity of performing RLM measurement by the terminal device is less than or equal to the eleventh threshold is used as an example. According to whether the second condition for measurement relaxation is met that is determined based on the first information and/or the second information, the determining whether to perform RLM measurement relaxation may include the following three cases.

① The terminal device may first determine whether the first condition is met, that is, determine whether the periodicity of performing RLM measurement by the terminal device is less than or equal to the eleventh threshold. If the periodicity of performing RLM measurement by the terminal device is less than or equal to the eleventh threshold, the terminal device determines, based on the first information and/or the second information, whether the second condition for measurement relaxation is met, and finally determine whether to perform RLM measurement relaxation. If the periodicity of performing RLM measurement by the terminal device is greater than the eleventh threshold, the terminal device may also determine, based on the first information and/or the second information, whether the second condition for measurement relaxation is met, and finally determine whether to perform RLM measurement relaxation.

② Alternatively, the terminal device may first determine whether the second condition of measurement relaxation is met, and if the second condition of measurement relaxation is met, determine whether the first condition is met, that is, whether the periodicity of performing RLM measurement by the terminal device is less than or equal to the eleventh threshold. If the periodicity of performing RLM measurement by the terminal device is less than or equal to the eleventh threshold, the terminal device determines to perform RLM measurement relaxation. If the periodicity of performing RLM measurement by the terminal device is greater than the eleventh threshold, the terminal device may also determine to perform RLM measurement relaxation. If the terminal device does not meet the second condition of measurement relaxation, the terminal device may determine not to perform RLM measurement relaxation.

③ Alternatively, the terminal device may determine whether both the second condition for measurement relaxation and the first condition are met. If both the second condition for measurement relaxation and the first condition are met, the terminal device may determine to perform RLM measurement relaxation. If both the second condition for measurement relaxation and the first condition are not met, the terminal device may determine not to perform RLM measurement relaxation. If the second condition for measurement relaxation is met but the first condition is not met, the terminal device may determine to perform RLM measurement relaxation. If the first condition is met, but the second condition for measurement relaxation is not met, the terminal device may determine not to perform RLM measurement relaxation.

In the foregoing solution, if the terminal device determines, based on at least one of the first information and the second information, that RLM measurement relaxation needs to be performed in this case, the terminal device may increase the periodicity of RLM measurement to 6 ms, 10 ms, or the like. Alternatively, if the terminal device determines, based on at least one of the first information and the second information, that RLM measurement relaxation does not need to be performed in this case, the terminal device may continue to perform RLM measurement at a periodicity of 2 ms.

In the solution provided in embodiments of this application, the terminal device may determine, based on the first condition and at least one of the first information and the second information, whether to perform RLM measurement relaxation. This can further ensure accuracy and flexibility of whether to perform RLM measurement relaxation.

The foregoing describes in detail the measurement methods in embodiments of this application with reference to FIG. 1 to FIG. 4. The following describes in detail measurement apparatuses in embodiments of this application with reference to FIG. 5 to FIG. 9.

FIG. 5 is a schematic block diagram of a measurement apparatus 500 according to an embodiment of this application. The apparatus 500 may correspond to the terminal device described in the method 200 or the method 300, or may be a chip or a component used in the terminal device. In addition, modules or units in the apparatus 500 are separately configured to perform the method 200 or actions or processing processes performed by the terminal device in the method 200. As shown in FIG. 5, the measurement apparatus 500 may include a processing unit 520.

The processing unit 520 is configured to obtain a plurality of pieces of information, where the plurality of pieces of information include first information and/or second information, the first information is used to indicate that at least one quality value of a radio link between the terminal device and a network device is less than or equal to a first threshold, and the second information is used to indicate that the at least one quality value of the radio link between the terminal device and the network device is greater than or equal to a second threshold.

The processing unit 520 is further configured to determine, based on the first information and/or the second information, whether to perform RLM measurement relaxation.

Optionally, the apparatus 500 may further include a transceiver unit 510.

Specifically, the transceiver unit 510 is configured to perform processes of S320, S330, and S350 in the method 300, and the processing unit 520 is configured to perform S210, S220, and S230 in the method 200. Specific processes of performing the corresponding steps by the units are described in detail in the method 200 and the method 300. For brevity, details are not described herein again.

FIG. 6 is a schematic block diagram of a measurement apparatus 600 according to an embodiment of this application. The apparatus 600 may correspond to (for example, may be applied to or may be) the network device described in the method 300. In addition, modules or units in the apparatus 600 are separately configured to perform actions or processing processes performed by the network device in the method 300. As shown in FIG. 6, the measurement apparatus 600 may include a transceiver unit 610.

The transceiver unit 610 is configured to send a first message to a terminal device, where the first message is used to indicate to allow the terminal device to perform RLM measurement relaxation, and/or the first message is used to indicate a related parameter of the RLM measurement relaxation.

Specifically, the transceiver unit 610 is configured to perform processes of S310, S340, and S360 in the method 300. A specific process of performing the corresponding steps by each unit is described in detail in the method 300. For brevity, details are not described herein again.

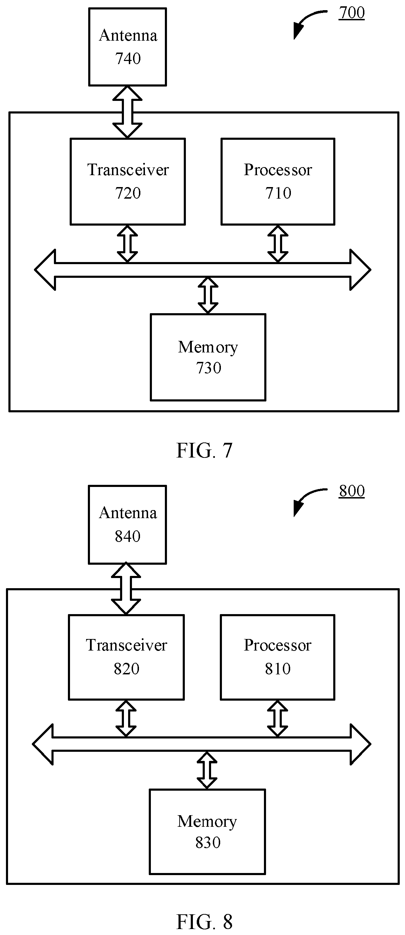

FIG. 7 is a schematic diagram of a structure of a measurement apparatus 700 according to an embodiment of this application. For example, the measurement apparatus 700 may be the terminal device in the embodiments. As shown in FIG. 7, the measurement apparatus 700 includes a processor 710 and a transceiver 720. Optionally, the measurement apparatus 700 further includes a memory 730. The processor 710, the transceiver 720, and the memory 730 communicate with each other through an internal connection channel to send a control signal and/or a data signal. The memory 730 is configured to store a computer program. The processor 710 is configured to invoke the computer program from the memory 730 and run the computer program to control the transceiver 720 to send and receive a signal.

The processor 710 and the memory 730 may be integrated into one processing apparatus. The processor 710 is configured to execute program code stored in the memory 730 to implement the function of the terminal device in the method embodiments. During specific implementation, the memory 730 may alternatively be integrated into the processor 710, or may be independent of the processor 710. The transceiver 720 may be implemented by using a transceiver circuit.

The terminal device may further include an antenna 740, configured to send, by using a radio signal, uplink data or uplink control signaling output by the transceiver 720, or send, after receiving downlink data or downlink control signaling, the downlink data or the downlink control signaling to the transceiver 720 for further processing.

It should be understood that, the apparatus 700 may correspond to the terminal device in the method 200 and the method 300 according to embodiments of this application, and the apparatus 700 may alternatively be a chip or a component used in the terminal device. In addition, units in the apparatus 700 implement corresponding procedures in the method 200 and the method 300. Specifically, the memory 730 is configured to store program code, so that when the processor 710 executes the program code, the processor 710 performs processes of S210, S220, and S230 in the method 200, and the transceiver 720 performs processes of S320, S330, and S350 in the method 300. A specific process in which each unit performs the corresponding steps is described in detail in the method 200 and the method 300. For brevity, details are not described herein again.

FIG. 8 is a schematic diagram of a structure of a measurement apparatus 800 according to an embodiment of this application. For example, the measurement apparatus 800 may be the network device in the embodiments. As shown in FIG. 8, the measurement apparatus 800 (for example, a base station) includes a processor 810 and a transceiver 820. Optionally, the measurement apparatus 800 further includes a memory 830. The processor 810, the transceiver 820, and the memory 830 communicate with each other through an internal connection path, to transfer a control signal and/or a data signal. The memory 830 is configured to store a computer program. The processor 810 is configured to invoke the computer program from the memory 830 and run the computer program, to control the transceiver 820 to send and receive a signal.

The processor 810 and the memory 830 may be integrated into one processing apparatus. The processor 810 is configured to execute program code stored in the memory 830 to implement the function of the network device in the method embodiments. During specific implementation, the memory 830 may alternatively be integrated into the processor 810, or may be independent of the processor 810. The transceiver 820 may be implemented by using a transceiver circuit.

The measurement apparatus 800 may further include an antenna 840, configured to send, by using a radio signal, downlink data or downlink control signaling output by the transceiver 820, or send, after receiving uplink data or uplink control signaling, the uplink data or the uplink control signaling to the transceiver 820 for further processing.

It should be understood that the apparatus 800 may correspond to the network device in the method 300 according to embodiments of this application, and the apparatus 800 may alternatively be a chip or a component used in the network device. In addition, units in the apparatus 800 implement corresponding procedures in the method 300 in FIG. 3(a) to FIG. 3(d). Specifically, the transceiver unit 820 is configured to perform processes of S310, S340, and S360 in the method 300. A specific process of performing the corresponding steps by each unit is described in detail in the method 300. For brevity, details are not described herein again.

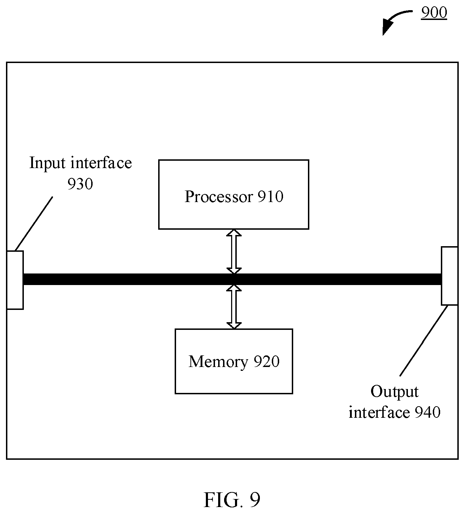

FIG. 9 is a schematic diagram of a structure of a chip according to an embodiment of this application. The chip 900 shown in FIG. 9 includes a processor 910. The processor 910 may invoke a computer program from a memory and run the computer program, to implement the methods in embodiments of this application.

Optionally, as shown in FIG. 9, the chip 900 may further include a memory 920. The processor 910 may invoke a computer program from the memory 920 and run the computer program, to perform the steps of the method 200 or the method 300 in embodiments of this application.

The memory 920 may be an independent component independent of the processor 910, or may be integrated into the processor 910.

Optionally, the chip 900 may further include an input interface 930. The processor 910 may communicate with another device or chip by controlling the input interface 930, and specifically, may obtain information or data sent by the another device or chip.

Optionally, the chip 900 may further include an output interface 940. The processor 910 may communicate with another device or chip by controlling the output interface 940, and specifically, may output information or data to the another device or chip.

Optionally, the chip may be applied to the terminal device in embodiments of this application, and the chip may implement corresponding procedures implemented by the terminal device in the methods in embodiments of this application. For brevity, details are not described herein again.

Optionally, the chip may be applied to the network device in embodiments of this application, and the chip may implement corresponding procedures implemented by the network device in the methods in embodiments of this application. For brevity, details are not described herein again.

It should be understood that the chip mentioned in embodiments of this application may also be referred to as a system-level chip, a system chip, a chip system, a system-on-chip chip, or the like.

An embodiment of this application further provides a computer-readable storage medium, configured to store a computer program.

Optionally, the computer-readable storage medium may be applied to the terminal device in embodiments of this application, and the computer program enables a computer to implement the corresponding procedures implemented by the terminal device in the methods in embodiments of this application. For brevity, details are not described herein again.

Optionally, the computer-readable storage medium may be applied to the network device in embodiments of this application, and the computer program enables a computer to implement the corresponding procedures implemented by the network device in the methods in embodiments of this application. For brevity, details are not described herein again.

An embodiment of this application further provides a computer program product, including computer program instructions.

Optionally, the computer program product may be applied to the terminal device in embodiments of this application, and the computer program instructions enable a computer to implement the corresponding procedures implemented by the terminal device in the methods in embodiments of this application. For brevity, details are not described herein again.

Optionally, the computer program product may be applied to the network device in embodiments of this application, and the computer program instructions enable a computer to implement the corresponding procedures implemented by the network device in the methods in embodiments of this application. For brevity, details are not described herein again.

Embodiments of this application further provide a computer program.

Optionally, the computer program may be applied to the terminal device in embodiments of this application, and when the computer program is run on a computer, the computer program enables the computer to implement the corresponding procedures implemented by the terminal device in the methods in embodiments of this application. For brevity, details are not described herein again.

Optionally, the computer program may be applied to the network device in embodiments of this application, and when the computer program is run on a computer, the computer program enables the computer to implement the corresponding procedures implemented by the network device in the methods in embodiments of this application. For brevity, details are not described herein again.

A person of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the described system, apparatus, and unit, refer to a corresponding process in the method embodiments. Details are not described herein again.

In the several embodiments according to this application, it should be understood that the disclosed system, apparatus, and method may be implemented in another manner. For example, the described apparatus embodiments are only examples. For example, the unit division is only logical function division and may be other division during actual implementation. For example, a plurality of units or components may be combined. In addition, the displayed or discussed mutual couplings or communication connections may be indirect couplings or communication connections through some interfaces, apparatuses, or units.

In addition, function units in the embodiments of this application may be integrated into one physical entity, or each of the units may be separately corresponding to one physical entity, or two or more units may be integrated into one physical entity.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are only specific implementations of this application, but are not intended to limit the protection scope of this application. Any variation or replacement readily figured out by a person skilled in the art in the technical scope disclosed in this application shall fall in the protection scope of this application. Therefore, the protection scope of this application shall fall within the scope of the present invention as defined by the appended claims.

## Claims

1. A measurement method, implemented by a terminal device (20, 30, 40, 500, 600, 700, 800, 900) or a chip in a terminal device (20, 30, 40, 500, 600, 700, 800, 900), the method comprises:
obtaining (S210) first information and/or second information, wherein the first information is used to indicate that values of downlink radio links qualities corresponding to all radio link monitoring-reference signal, RLM-RS, resources that are measured by the terminal device (20, 30, 40, 500, 600, 700, 800, 900) are less than or equal to a first threshold, the second information is used to indicate that a value of a downlink radio link quality corresponding to at least one RLM-RS resource that is measured by the terminal device (20, 30, 40, 500, 600, 700, 800, 900) is greater than or equal to a second threshold, wherein all the RLM-RS resources are configured between the terminal device (20, 30, 40, 500, 600, 700, 800, 900) and a network device (10), and wherein the at least one RLM-RS resource is configured between the terminal device (20, 30, 40, 500, 600, 700, 800, 900) and the network device (10); and
the method being **characterized in**:
determining (S220), based on the first information and/or the second information in combination with a first condition, whether to perform a radio link monitoring, RLM, measurement relaxation, wherein the first condition comprises at least one of the following conditions:
a variation difference of reference signal receiving power (RSRP) measured by the terminal device (20, 30, 40, 500, 600, 700, 800, 900) in a second time period is less than or equal to a seventh threshold;
a variation difference of reference signal receiving quality (RSRQ) measured by the terminal device (20, 30, 40, 500, 600, 700, 800, 900) in the second time period is less than or equal to an eighth threshold; or,
a periodicity of performing RLM measurement by the terminal device (20, 30, 40, 500, 600, 700, 800, 900) is less than or equal to an eleventh threshold.

2. The method according to claim 1, wherein the method further comprises:
skipping (S230) the RLM measurement relaxation in response to starting of a T310 timer, wherein the T310 timer is started when the terminal device (20, 30, 40, 500, 600, 700, 800, 900) detects a physical layer problem of a primary cell or a primary secondary cell.

3. The method according to claim 1 or 2, wherein the method further comprises:
receiving (S310) a first message from the network device (10), wherein the first message is used to indicate that the terminal device is allowed to perform the RLM measurement relaxation, and/or the first message is used to indicate a related parameter of the RLM measurement relaxation.

4. The method according to any one of claims 1 to 3, wherein the method further comprises:
sending (S350) a third message to the network device (10), wherein the third message is used to indicate that the terminal device (20, 30, 40, 500, 600, 700, 800, 900) has a RLM measurement relaxation capability.

5. The method according to any one of claims 1-4, wherein the obtaining first information and/or second information, comprises:
obtaining, by a physical PHY layer, the first information and/or the second information respectively based on detected values of the downlink radio links qualities corresponding to the all RLM-RS resources configured or detected value of the downlink radio link quality corresponding to the at least one RLM-RS resource configured.

6. The method according to any one of claims 1-5, wherein the manner of the RLM measurement relaxation comprises increasing a periodicity of RLM measurement.

7. The method according to any one of claims 1 to 6, wherein the determining (S220), based on the first information and/or the second information in combination with a first condition, whether to perform a radio link monitoring, RLM, measurement relaxation comprises:
determining whether to perform the RLM measurement relaxation based on an amount of the first information and/or an amount of the second information; or,
determining whether to perform the RLM measurement relaxation based on whether information obtained in a first preset duration is the first information; or,
determining whether to perform the RLM measurement relaxation based on whether the information obtained in the first preset duration is the second information.

8. The method according to claim 7, wherein the determining (S220) whether to perform the RLM measurement relaxation based on an amount of the first information and/or an amount of the second information, comprises:
determining whether to perform the RLM measurement relaxation based on an amount of the first information and/or an amount of the second information obtained in a first time period; or,
determining whether to perform the RLM measurement relaxation based on an amount of the first information continuously obtained or an amount of the second information continuously obtained before a current moment.

9. The method according to claim 8, wherein the determining (S220) whether to perform the RLM measurement relaxation based on an amount of the first information and/or an amount of the second information obtained in a first time period, comprises:
determining to perform the RLM measurement relaxation if the amount of the first information obtained in the first time period is less than or equal to a third threshold, or if the amount of the second information obtained in the first time period is greater than a fourth threshold; or
determining not to perform the RLM measurement relaxation if the amount of the first information obtained in the first time period is greater than the third threshold, or if the amount of the second information obtained in the first time period is less than or equal to the fourth threshold.

10. The method according to claim 8, wherein
the determining (S220) whether to perform the RLM measurement relaxation based on an amount of the first information continuously obtained or an amount of the second information continuously obtained before a current moment, comprises:
determining to perform the RLM measurement relaxation if the amount of the first information continuously obtained before the current moment is less than or equal to a fifth threshold, or the amount of the second information continuously obtained before the current moment is greater than a sixth threshold; or
determining not to perform the RLM measurement relaxation if the amount of the first information continuously obtained before the current moment is greater than the fifth threshold, or if the amount of the second information continuously obtained before the current moment is less than or equal to the sixth threshold.

11. The method according to any one of claims 1-10, wherein the first information comprises out-of-sync indication information, and the second information comprises in-sync indication information.

12. The method according to any one of claims 1-11, wherein the method further comprises:
sending (S330) a second message to the network device (10), wherein the second message is used to request to configure the RLM measurement relaxation.

13. A terminal device (700) or a chip in a terminal device (700), comprising a processor (710) and a memory (730), wherein
the processor (710) is coupled to the memory (730), the memory (730) is configured to store a program or instructions, and when the program or the instructions are executed by the processor (710), the terminal device is enabled to perform the method according to any one of claims 1 to 12; and
the memory (730) is configured to store program instructions and data.

14. A computer-readable storage medium, wherein the computer-readable storage medium stores a computer program, and when the computer program is executed by a terminal device, the method according to any one of claims 1 to 12 is performed.

15. A computer program product, wherein the computer program product comprises computer program instructions, when the instructions are run on a terminal device, the instructions enable the terminal device to perform the method according to any one of claims 1 to 12.

## Patentansprüche

1. Messverfahren, das durch ein Endgerät (20, 30, 40, 500, 600, 700, 800, 900) oder einen Chip in einem Endgerät (20, 30, 40, 500, 600, 700, 800, 900) implementiert wird, wobei das Verfahren umfasst:
Erhalten (S210) erster Informationen und/oder zweiter Informationen, wobei die ersten Informationen verwendet werden, um anzuzeigen, dass Werte von Downlink-Funkverbindungsqualitäten, die allen Funkverbindungsüberwachungs-Referenzsignal(RLM-RS)-Ressourcen entsprechen, die durch das Endgerät (20, 30, 40, 500, 600, 700, 800, 900) gemessen werden, kleiner als oder gleich einem ersten Schwellenwert sind, die zweiten Informationen verwendet werden, um anzuzeigen, dass ein Wert einer Downlink-Funkverbindungsqualität, der mindestens einer RLM-RS-Ressource entspricht, die durch das Endgerät (20, 30, 40, 500, 600, 700, 800, 900) gemessen wird, größer als oder gleich einem zweiten Schwellenwert ist, wobei alle RLM-RS-Ressourcen zwischen dem Endgerät (20, 30, 40, 500, 600, 700, 800, 900) und einer Netzwerkvorrichtung (10) konfiguriert sind, und wobei die mindestens eine RLM-RS-Ressource zwischen dem Endgerät (20, 30, 40, 500, 600, 700, 800, 900) und der Netzwerkvorrichtung (10) konfiguriert ist; und
das Verfahren **gekennzeichnet ist durch**:
Bestimmen (S220), basierend auf den ersten Informationen und/oder den zweiten Informationen in Kombination mit einer ersten Bedingung, ob eine Funkverbindungsüberwachungs(RLM)-Messungsrelaxation durchzuführen ist, wobei die erste Bedingung mindestens eine der folgenden Bedingungen umfasst:
eine Variationsdifferenz der Referenzsignal-Empfangsleistung (RSRP), die **durch** das Endgerät (20, 30, 40, 500, 600, 700, 800, 900) in einer zweiten Zeitspanne gemessen wird, ist kleiner als oder gleich einem siebten Schwellenwert;
eine Variationsdifferenz der Referenzsignal-Empfangsqualität (RSRQ), die **durch** das Endgerät (20, 30, 40, 500, 600, 700, 800, 900) in der zweiten Zeitspanne gemessen wird, ist kleiner als oder gleich einem achten Schwellenwert; oder
eine Periodizität einer Durchführung einer RLM-Messung **durch** das Endgerät (20, 30, 40, 500, 600, 700, 800, 900) ist kleiner als oder gleich einem elften Schwellenwert.

2. Verfahren nach Anspruch 1, wobei das Verfahren ferner umfasst:
Überspringen (S230) der RLM-Messungsrelaxation als Reaktion auf ein Starten eines T310-Timers, wobei der T310-Timer gestartet wird, wenn das Endgerät (20, 30, 40, 500, 600, 700, 800, 900) ein Problem einer Bitübertragungsschicht einer Primärzelle oder einer primären Sekundärzelle erkennt.

3. Verfahren nach Anspruch 1 oder 2, wobei das Verfahren ferner umfasst:
Empfangen (S310) einer ersten Nachricht von der Netzwerkvorrichtung (10), wobei die erste Nachricht verwendet wird, um anzuzeigen, dass dem Endgerät erlaubt ist, die RLM-Messungsrelaxation durchzuführen, und/oder die erste Nachricht verwendet wird, um einen zugehörigen Parameter der RLM-Messungsrelaxation anzuzeigen.

4. Verfahren nach einem der Ansprüche 1 bis 3, wobei das Verfahren ferner umfasst:
Senden (S350) einer dritten Nachricht an die Netzwerkvorrichtung (10), wobei die dritte Nachricht verwendet wird, um anzuzeigen, dass das Endgerät (20, 30, 40, 500, 600, 700, 800, 900) eine RLM-Messungsrelaxationsfähigkeit aufweist.

5. Verfahren nach einem der Ansprüche 1 bis 4, wobei das Erhalten der ersten Informationen und/oder der zweiten Informationen umfasst:
Erhalten, durch eine Bitübertragungsschicht PHY, der ersten Informationen und/oder der zweiten Informationen, basierend auf erkannten Werten der Downlink-Funkverbindungsqualitäten, die allen konfigurierten RLM-RS-Ressourcen entsprechen, oder dem erkannten Wert der Downlink-Funkverbindungsqualität, der der mindestens einen konfigurierten RLM-RS-Ressource entspricht.

6. Verfahren nach einem der Ansprüche 1 bis 5, wobei die Art der RLM-Messungsrelaxation ein Erhöhen einer Periodizität der RLM-Messung umfasst.

7. Verfahren nach einem der Ansprüche 1 bis 6, wobei das Bestimmen (S220), basierend auf den ersten Informationen und/oder den zweiten Informationen in Kombination mit einer ersten Bedingung, ob eine Funkverbindungsüberwachungs(RLM)-Messungsrelaxation durchzuführen ist, umfasst:
Bestimmen, ob die RLM-Messungsrelaxation durchzuführen ist, basierend auf einer Menge der ersten Informationen und/oder einer Menge der zweiten Informationen; oder Bestimmen, ob die RLM-Messungsrelaxation durchzuführen ist, basierend darauf, ob Informationen, die in einer ersten voreingestellten Dauer erhalten werden, die ersten Informationen sind; oder
Bestimmen, ob die RLM-Messungsrelaxation durchzuführen ist, basierend darauf, ob die Informationen, die in der ersten voreingestellten Dauer erhalten werden, die zweiten Informationen sind.

8. Verfahren nach Anspruch 7, wobei das Bestimmen (S220), ob die RLM-Messungsrelaxation durchzuführen ist, basierend auf einer Menge der ersten Informationen und/oder einer Menge der zweiten Informationen, umfasst:
Bestimmen, ob die RLM-Messungsrelaxation durchzuführen ist, basierend auf einer Menge der ersten Informationen und/oder einer Menge der zweiten Informationen, die in einer ersten Zeitspanne erhalten wird; oder
Bestimmen, ob die RLM-Messungsrelaxation durchzuführen ist, basierend auf einer Menge der ersten Informationen, die kontinuierlich vor einem aktuellen Zeitpunkt erhalten wird, oder einer Menge der zweiten Informationen, die kontinuierlich vor einem aktuellen Zeitpunkt erhalten wird.

9. Verfahren nach Anspruch 8, wobei das Bestimmen (S220), ob die RLM-Messungsrelaxation durchzuführen ist, basierend auf einer Menge der ersten Informationen und/oder einer Menge der zweiten Informationen, die in einer ersten Zeitspanne erhalten wird, umfasst:
Bestimmen, die RLM-Messungsrelaxation durchzuführen, falls die Menge der ersten Informationen, die in der ersten Zeitspanne erhalten wird, kleiner als oder gleich einem dritten Schwellenwert ist, oder falls die Menge der zweiten Informationen, die in der ersten Zeitspanne erhalten wird, größer als ein vierter Schwellenwert ist; oder
Bestimmen, die RLM-Messungsrelaxation nicht durchzuführen, falls die Menge der ersten Informationen, die in der ersten Zeitspanne erhalten wird, größer als der dritte Schwellenwert ist, oder falls die Menge der zweiten Informationen, die in der ersten Zeitspanne erhalten wird, kleiner als oder gleich dem vierten Schwellenwert ist.

10. Verfahren nach Anspruch 8, wobei
das Bestimmen (S220), ob die RLM-Messungsrelaxation durchzuführen ist, basierend auf einer Menge der ersten Informationen, die kontinuierlich vor einem aktuellen Zeitpunkt erhalten wird, oder einer Menge der zweiten Informationen, die kontinuierlich vor einem aktuellen Zeitpunkt erhalten wird, umfasst:
Bestimmen, die RLM-Messungsrelaxation durchzuführen, falls die Menge der ersten Informationen, die kontinuierlich vor dem aktuellen Zeitpunkt erhalten wird, kleiner als oder gleich einem fünften Schwellenwert ist, oder die Menge der zweiten Informationen, die kontinuierlich vor dem aktuellen Zeitpunkt erhalten wird, größer als ein sechster Schwellenwert ist; oder
Bestimmen, die RLM-Messungsrelaxation nicht durchzuführen, falls die Menge der ersten Informationen, die kontinuierlich vor dem aktuellen Zeitpunkt erhalten wird, größer als der fünfte Schwellenwert ist, oder falls die Menge der zweiten Informationen, die kontinuierlich vor dem aktuellen Zeitpunkt erhalten wird, kleiner als oder gleich dem sechsten Schwellenwert ist.

11. Verfahren nach einem der Ansprüche 1 bis 10, wobei die ersten Informationen Außer-Synchronisation-Anzeigeninformationen umfassen, und die zweite Informationen In-Synchronisation-Anzeigeninformationen umfassen.

12. Verfahren nach einem der Ansprüche 1 bis 11, wobei das Verfahren ferner umfasst:
Senden (S330) einer zweiten Nachricht an die Netzwerkvorrichtung (10), wobei die zweite Nachricht verwendet wird, um ein Konfigurieren der RLM-Messungslockerung anzufordern.

13. Endgerät (700) oder Chip in einem Endgerät (700), das/der einen Prozessor (710) und einen Speicher (730) umfasst, wobei
der Prozessor (710) mit dem Speicher (730) gekoppelt ist, der Speicher (730) konfiguriert ist, um ein Programm oder Anweisungen zu speichern, und wenn das Programm oder die Anweisungen durch den Prozessor (710) ausgeführt werden, das Endgerät in die Lage versetzt wird, das Verfahren nach einem der Ansprüche 1 bis 12 durchzuführen; und der Speicher (730) konfiguriert ist, um Programmanweisungen und Daten zu speichern.

14. Computerlesbares Speicherungsmedium, wobei das computerlesbare Speicherungsmedium ein Computerprogramm speichert, und wenn das Computerprogramm durch ein Endgerät ausgeführt wird, das Verfahren nach einem der Ansprüche 1 bis 12 durchgeführt wird.

15. Computerprogrammprodukt, wobei das Computerprogrammprodukt Computerprogrammanweisungen umfasst, wenn die Anweisungen auf einem Endgerät laufen gelassen werden, die Anweisungen das Endgerät in die Lage versetzen, das Verfahren nach einem der Ansprüche 1 bis 12 durchzuführen

## Revendications

1. Procédé de mesure, mis en œuvre par un dispositif terminal (20, 30, 40, 500, 600, 700, 800, 900) ou une puce dans un dispositif terminal (20, 30, 40, 500, 600, 700, 800, 900), le procédé comprend :
l'obtention (S210) de premières informations et/ou de secondes informations, dans lequel les premières informations sont utilisées pour indiquer que des valeurs de qualités de liaisons radio de liaison descendante correspondant à toutes les ressources de signal de référence de surveillance de liaison radio, RLM-RS, qui sont mesurées par le dispositif terminal (20, 30, 40, 500, 600, 700, 800, 900) sont inférieures ou égales à un premier seuil, les secondes informations sont utilisées pour indiquer qu'une valeur d'une qualité de liaison radio de liaison descendante correspondant à au moins une ressource RLM-RS qui est mesurée par le dispositif terminal (20, 30, 40, 500, 600, 700, 800, 900) est supérieure ou égale à un deuxième seuil, dans lequel toutes les ressources RLM-RS sont configurées entre le dispositif terminal (20, 30, 40, 500, 600, 700, 800, 900) et un dispositif de réseau (10), et dans lequel l'au moins une ressource RLM-RS est configurée entre le dispositif terminal (20, 30, 40, 500, 600, 700, 800, 900) et le dispositif de réseau (10) ; et
et le procédé étant **caractérisé par :**
le fait de déterminer (S220), sur la base des premières informations et/ou des secondes informations en combinaison avec une première condition, s'il faut réaliser un assouplissement de mesure de surveillance de liaison radio, RLM, dans lequel la première condition comprend au moins l'une parmi les conditions suivantes :
une différence de variation de puissance de réception de signal de référence (RSRP) mesurée par le dispositif terminal (20, 30, 40, 500, 600, 700, 800, 900) au cours d'une seconde période de temps est inférieure ou égale à un septième seuil ;
une différence de variation de qualité de réception de signal de référence (RSRQ) mesurée par le dispositif terminal (20, 30, 40, 500, 600, 700, 800, 900) au cours de la seconde période de temps est inférieure ou égale à un huitième seuil ; ou,
une périodicité de réalisation de mesure RLM par le dispositif terminal (20, 30, 40, 500, 600, 700, 800, 900) est inférieure ou égale à un onzième seuil.

2. Procédé selon la revendication 1, dans lequel le procédé comprend en outre :
le saut (S230) de l'assouplissement de mesure RLM en réponse au démarrage d'un temporisateur T310, dans lequel le temporisateur T310 est démarré lorsque le dispositif terminal (20, 30, 40, 500, 600, 700, 800, 900) détecte un problème de couche physique d'une cellule primaire ou d'une cellule secondaire primaire.

3. Procédé selon la revendication 1 ou 2, dans lequel le procédé comprend en outre :
la réception (S310) d'un premier message en provenance du dispositif de réseau (10), dans lequel le premier message est utilisé pour indiquer que le dispositif terminal est autorisé à réaliser l'assouplissement de mesure RLM, et/ou le premier message est utilisé pour indiquer un paramètre relatif de l'assouplissement de mesure RLM.

4. Procédé selon l'une quelconque des revendications 1 à 3, dans lequel le procédé comprend en outre :
l'envoi (S350) d'un troisième message au dispositif de réseau (10), dans lequel le troisième message est utilisé pour indiquer que le dispositif terminal (20, 30, 40, 500, 600, 700, 800, 900) a une capacité d'assouplissement de mesure RLM.

5. Procédé selon l'une quelconque des revendications 1 à 4, dans lequel l'obtention de premières informations et/ou de secondes informations comprend :
l'obtention, par une couche physique PHY, des premières informations et/ou des secondes informations respectivement sur la base de valeurs détectées des qualités de liaisons radio de liaison descendante correspondant à toutes les ressources RLM-RS configurées ou d'une valeur détectée de la qualité de liaison radio de liaison descendante correspondant à l'au moins une ressource RLM-RS configurée.

6. Procédé selon l'une quelconque des revendications 1 à 5, dans lequel le mode de l'assouplissement de mesure RLM comprend l'augmentation d'une périodicité de mesure RLM.

7. Procédé selon l'une quelconque des revendications 1 à 6, dans lequel le fait de déterminer (S220), sur la base des premières informations et/ou des secondes informations en combinaison avec une première condition, s'il faut réaliser un assouplissement de mesure de surveillance de liaison radio, RLM, comprend :
le fait de déterminer s'il faut réaliser l'assouplissement de mesure RLM sur la base d'une quantité des premières informations et/ou d'une quantité des secondes informations ; ou,
le fait de déterminer s'il faut réaliser l'assouplissement de mesure RLM sur la base du fait de savoir si des informations obtenues au cours d'une première durée prédéfinie sont les premières informations ; ou,
le fait de déterminer s'il faut réaliser l'assouplissement de mesure de RLM sur la base du fait de savoir si les informations obtenues au cours de la première durée prédéfinie sont les secondes informations.

8. Procédé selon la revendication 7, dans lequel le fait de déterminer (S220) s'il faut réaliser l'assouplissement de mesure RLM sur la base d'une quantité des premières informations et/ou d'une quantité des secondes informations, comprend :
le fait de déterminer s'il faut réaliser l'assouplissement de mesure RLM sur la base d'une quantité des premières informations et/ou d'une quantité des secondes informations obtenues au cours d'une première période ; ou,
le fait de déterminer s'il faut réaliser l'assouplissement de mesure RLM sur la base d'une quantité des premières informations obtenues en continu ou d'une quantité des secondes informations obtenues en continu avant un moment actuel.

9. Procédé selon la revendication 8, dans lequel le fait de déterminer (S220) s'il faut réaliser l'assouplissement de mesure RLM sur la base d'une quantité des premières informations et/ou d'une quantité des secondes informations obtenues au cours d'une première période, comprend :
le fait de déterminer de réaliser l'assouplissement de mesure RLM si la quantité des premières informations obtenues au cours de la première période est inférieure ou égale à un troisième seuil, ou si la quantité des secondes informations obtenues au cours de la première période est supérieure à un quatrième seuil ; ou
le fait de déterminer de ne pas réaliser l'assouplissement de mesure RLM si la quantité des premières informations obtenues au cours de la première période de temps est supérieure au troisième seuil, ou si la quantité des secondes informations obtenues au cours de la première période de temps est inférieure ou égale au quatrième seuil.

10. Procédé selon la revendication 8, dans lequel
le fait de déterminer (S220) s'il faut réaliser l'assouplissement de mesure RLM sur la base d'une quantité des premières informations obtenues en continu ou d'une quantité des secondes informations obtenues en continu avant un moment actuel, comprend :
le fait de déterminer de réaliser l'assouplissement de mesure RLM si la quantité des premières informations obtenues en continu avant le moment actuel est inférieure ou égale à un cinquième seuil, ou si la quantité des secondes informations obtenues en continu avant le moment actuel est supérieure à un sixième seuil ; ou
le fait de déterminer de ne pas réaliser l'assouplissement de mesure RLM si la quantité des premières informations obtenues en continu avant le moment actuel est supérieure au cinquième seuil, ou si la quantité des secondes informations obtenues en continu avant le moment actuel est inférieure ou égale au sixième seuil.

11. Procédé selon l'une quelconque des revendications 1 à 10, dans lequel les premières informations comprennent des informations d'indication non synchronisées, et les secondes informations comprennent des informations d'indication synchronisées.

12. Procédé selon l'une quelconque des revendications 1 à 11, dans lequel le procédé comprend en outre : l'envoi (S330) d'un deuxième message au dispositif de réseau (10), dans lequel le deuxième message est utilisé pour demander de configurer l'assouplissement de mesure RLM.

13. Dispositif terminal (700) ou puce dans un dispositif terminal (700), comprenant un processeur (710) et une mémoire (730), dans lequel
le processeur (710) est couplé à la mémoire (730), la mémoire (730) est configurée pour stocker un programme ou des instructions, et lorsque le programme ou les instructions sont exécutés par le processeur (710), le dispositif terminal est activé pour réaliser le procédé selon l'une quelconque des revendications 1 à 12 ; et
la mémoire (730) est configurée pour stocker des instructions de programme et des données.

14. Support de stockage lisible par ordinateur, dans lequel le support de stockage lisible par ordinateur stocke un programme informatique, et lorsque le programme informatique est exécuté par un dispositif terminal, le procédé selon l'une quelconque des revendications 1 à 12 est réalisé.

15. Produit-programme d'ordinateur, dans lequel le produit-programme d'ordinateur comprend des instructions de programme informatique, lorsque les instructions sont exécutées sur un dispositif terminal, les instructions permettent au dispositif terminal de réaliser le procédé selon l'une quelconque des revendications 1 à 12
